# NEW EUROPEAN PATENT SPECIFICATION

(11) **EP 0 452 106 B2**
(45) Date of publication and mention of the opposition decision: **13.12.2000**
(45) Mention of the grant of the patent: 16.10.1996
(21) Application number: 91303146.4
(22) Date of filing: 10.04.1991
(51) Int. Cl.: C11D 17/00

(54) **Concentrated aqueous surfactants**
Konzentrierte wässrige Tensidlösung
Composition aqueuse d'un tensio-actif

(30) Priority: 10.04.1990 GB 9008120; 19.03.1991 GB 9105788
(43) Date of publication of application: 16.10.1991
(73) Proprietor: ALBRIGHT & WILSON UK LIMITED, Oldbury, Warley, West Midlands B68 0NN (GB)
(72) Inventor: Hawkins, John, Keekle, Cleator Moor, Cumbria (GB); Messenger, Edward Tunstall, Workington, Cumbria, CA14 1MN (GB); Hodgetts, Robert, Hayscastle Cross, Dyfed, SA62 5PR (GB); Nicholson, William John, Halesowen, West Midlands, B62 4LN (GB)
(74) Representative: Savidge, Roger Gordon Madgwick

(56) References cited:
- EP-A- 0 295 021
- EP-A- 0 301 884
- EP-A- 0 346 993
- EP-A- 0 388 239
- GB-A- 2 022 125
- GB-A- 2 179 053
- GB-A- 2 179 054
- US-A- 3 793 233
- US-A- 4 781 849
- J.Chem.Soc., Faraday Trans. I, 1983, 79, 975-1000;
- Trans. Farad. Soc., 1967, 63, 2839-2845;
- Anionic Surfactants: Physical Chemistry of Surfactant Action, vol. 11, New York, Dekker, 1981.

## Description

The present invention provides aqueous surfactant systems containing high levels of surfactant, which are particularly useful in preparing highly concentrated liquid laundry detergents which have been formulated to satisfy demands for environmentally friendly laundry products without the relatively poor washing performance hitherto associated with so called "green" detergents, and concentrated laundry liquids capable of competing effectively with so-called "compact" powders.

Liquid laundry detergents have a number of advantages compared with powders which have led to their taking a substantial proportion of the total laundry detergent market. The introduction of compact powders containing higher concentrations of active ingredient than the traditional powders has challenged the trend towards liquids. There is a market requirement for more concentrated liquids to meet this challenge.

The ability to concentrate liquid detergents has hitherto been limited by the tendency of conventional detergent surfactant systems to form mesophases at concentrations above 30% by weight, based on the weight of water and surfactant. Mesophases, or liquid crystal phases are phases which exhibit a degree of order less than that of a solid but greater than that of a classical liquid, e.g. order in one or two, but not all three dimensions.

Up to about 30% many surfactants form micellar solutions (L₁-phase) in which the surfactant is dispersed in water as micelles, which are aggregates of surfactant molecules, too small to be visible through the optical microscope. Micellar solutions look and behave for most purposes like true solutions. At about 30% many detergent surfactants form an M-Phase, which is a liquid crystal with a hexagonal symmetry and is normally an immobile, wax-like material. Such products are not pourable and obviously cannot be used as liquid detergents. At higher concentrations, e.g. above about 50% by weight, usually over some concentration range lying above 60% and below 80% a more mobile phase, the G-phase, is formed. G-phases are thixotropic, normally pourable phases, but typically have a viscosity, flow characteristic and cloudy, opalescent appearance, that render them unattractive to consumers and unsuitable for use directly as laundry detergents.

At still higher concentrations e.g. above about 70 or 80% surfactants form a hydrated solid. Some, especially non-ionic surfactants, form a liquid phase containing dispersed micelle size droplets of water (L₂ -phase). L₂-phases have been found unsuitable for use as liquid detergents because they do not disperse readily in water, but tend to form gels on dilution.

The different phases can be recognised by a combination of appearance, rheology, textures under the polarising microscope, electron microscopy and X-ray diffraction or neutron scattering.

The following terms may require explanation or definition in relation to the different phases discussed in this specification: "Optically isotropic" phases do not tend to rotate the plane of polarisation of plane polarised light. If a drop of sample is placed between two sheets of optically plane polarising material whose planes of polarisation are at right angles, and light is shone on one sheet, optically isotropic samples do not appear substantially brighter than their surroundings when viewed through the other sheet. Optically anisotropic materials appear substantially brighter. Optically anisotropic mesophases typically show characteristic textures when viewed through a microscope between crossed polarisers, whereas optically isotropic phases usually show a dark, essentially featureless continuum.

Newtonian liquids have a viscosity which is independent of shear. For the purposes of this specification, liquids are considered Newtonian if the viscosity does not vary substantially at shear rates up to 1000 sec⁻¹.

"Lamellar" phases are phases which comprise a plurality of bilayers of surfactant arranged in parallel and separated by liquid medium. They include both solid phases and the liquid crystal G-phase. G-phases can exist in the form of open domains of lamellae or as spherulites formed from a number of concentric spheroidal shells of surfactant. In this specification the term "lamellar" will be reserved for compositions which are at least partly of the former type. Compositions at least predominantly of the latter type are referred to herein as "spherulitic".

L₁ - phase are mobile, optically isotropic, and typically Newtonian liquids which show no texture under the polarising microscope. Electron microscopy is capable of resolving texture only at very high magnifications, and X-ray or neutron scattering gives only very small angle scattering close to the reference beam. The viscosity of an L₂ - phase is usually low, but may rise significantly as the concentration approaches the upper phase boundary. This is believed to reflect a change in the shape of the micelles from spherical to prolate.

M-phases are typically immobile, anisotropic products resembling waxes. They give characteristic textures under the polarising microscope, and a hexagonal diffraction pattern by X-ray or neutron diffraction which comprises a major peak, usually at values corresponding to a repeat spacing between 4 and 10 nm, and sometimes higher order peaks, the first at a Q value which is √3 x the Q value of the principal peak and the next at double the Q value of the principal peak. Q is the momentum transfer vector and is related to the repeat spacing d by the equation Q =

G-phases are pourable, thixotropic, anisotropic products. They are typically viscous-looking, opalescent materials with a characteristic "smeary" appearance on flowing. They form, characteristic textures under the polarising microscope and freeze fractured samples have a lamellar appearance under the electron microscope. X-ray diffraction or neutron scattering similarly reveal a lamellar structure, with a principal peak typically between 4 and 10 nm, usually 5 to 6 nm. Higher order peaks, when present occur at double or higher integral multiples of the Q value of the principal peak.

L₂-phases resemble L₁-phases but are less *easily* diluted with water.

A detailed description, with illustrations, of the different textures observable using a polarising microscope, which characterise the different mesophases, is to be found in the classic paper by Roseveare JAOCS Vol.31 P.628.

Detergents for laundry use normally contain a surfactant and a builder. The latter helps the surfactant to perform much more efficiently, thereby substantially reducing the amount of surfactant needed. Built liquid detergents usually contain about 10 to 15% of surfactant and 20 to 30% of builder.

In the absence of builder more than double the amount of surfactant is required to obtain acceptable performance. Since the surfactant is considerably more expensive than the builder, the latter has generally been considered essential to cost effective performance.

Allegations have been made that the most cost effective detergent builders may in some circumstances contribute to an excessive growth of aquatic flora. This has led to a demand for unbuilt laundry detergents. The principal unbuilt laundry products that have been put on the market have hitherto compensated for lack of builder by including very high levels of surfactant, e.g 30 to 45%. However, in order to incorporate such high concentrations in stable compositions together with the various minor ingredients needed for acceptable laundry performance, it has proved necessary to use solvents such as ethanol and/or glycols in concentrations usually around 10% of the weight of the detergent composition. In the absence of solvents, high concentrations (e.g. in the range 30 to 55% by weight based on the total weight of surfactant and water) of surfactant are normally unattainable in liquid detergents due to formation of viscous mesophases. These may have viscosities so high that the product is unpourable. Generally, consumers in many countries expect products with a viscosity less than 1.5 Pa.s, especially below 1 Pa.s e.g. 0.4 to 0.9 Pa.s. All references herein to viscosity are to viscosity as measured with a Brookfield RVT viscometer, spindle 4, at 100 rpm. and at 20°C unless stated to the contrary.

The solvents not only increase the cost of the formulation, without contributing to performance, but have themselves come under attack as a source of damage to the environment.

The only laundry products to have been marketed without either builder or solvent hitherto have had low surfactant concentration and have not given adequate performance.

Because a high level of surfactant in the above solvent containing formulations is required to compensate for the lack of builder, the dosage required is the same as for conventional built liquid detergents. These liquids cannot therefore be compared with compact powders. Moreover, since the solvents tend to break any surfactant structure, it is not possible to suspend solid builders in such formulations.

The invention therefore has, as one object, to provide concentrated surfactant systems that overcome the problem of formulating liquid detergent compositions which: (a) contain high concentrations of surfactants, e.g. in the range 30 to 55% surfactant based on the total weight of surfactant and water; (b) have lower viscosities than the mesophases normally encountered at such concentrations, e.g. below 2 Pa.s preferably below 1.5 Pa.s; and (c) are not dependent upon the presence of high concentrations of solvent.

A second object of the invention is to provide concentrated surfact systems that have solid suspending properties, and that can be used to form stable suspensions of useful solid particles. In particular the invention provides a solution to the problem of formulating liquid detergents with high concentrations of surfactant and containing stably suspended solid builders, at acceptable viscosities.

We have now discovered how to prepare stable homogeneous laundry detergents containing high concentrations of surfactant which do not require the presence of substantial amounts of solvents. We have further discovered how to suspend useful solids such as builders in concentrated aqueous surfactant to provide mobile and stable suspensions, including built, liquid detergents which are equivalent to compact powders.

We have discovered that certain mixtures of surfactant which contain a substantial proportion of relatively soluble surfactant, e.g. surfactants of low cloud point (e.g. below 0°C) such as alkyl polyalkyleneoxy sulphates, and especially surfactants which form a well defined M-phase, together with at least one cosurfactant usually of relatively low solubility, at concentrations which usually lie between about 30 and about 55% total surfactant form a system which exhibits distinctive properties. We believe that such compositions are novel. Characteristic properties generally include: pourability, often with an appreciable yield point, which confers a viscous, mucus-like characteristic; lamellar flow patterns, resembling those normally observed with a "G" phase; birefringence;
and in most instances a hexagonal symmetry typical of an M phase, by small angle X-ray diffraction or neutron scattering. Some of these novel compositions tend to separate on prolonged standing into two layers, one of which is substantially clear, optically isotropic and substantially Newtonian in behaviour and the other a typical G-phase. Optical microscopy using crossed polars or differential interference contrast, typically reveals textures which may resemble either M-phase or G-phase or be intermediate, or alternate between the two on application and relaxation of shear.

These novel system will be referred to for convenience as "pourable hexagonal phases". We believe that one possible explanation for their usual properties is that they are compositions which exist normally in the M-phase but which are very close to the M/G phase boundary (or which exhibit a broad, indistinct M/G phase boundary (or which exhibit a broad indistinct M/G phase boundary region), so that shear stresses convert them to G-phases. Because of their ability to change phase under applied shear certain of our novel pourable hexagonal phases have potential application as shear sensors. The pourable hexagonal phases are more dilute than conventional G-phases which typically occur at active concentrations above 50%, usually 60 to 80%. They are also more viscous in appearance than the G-phases which normally occur in the lower part of the above typical range.

We have further discovered that when sufficient electrolyte is added to the aforesaid pourable hexagonal phases, a substantially Newtonian, mobile and substantially optically isotropic liquid is formed which normally exhibits at least one distinctive peak in its X-ray or neutron diffraction plot, suggestive of the presence of a hexagonal, lamellar or spherulitic system.

These observations are wholly unexpected since the solutions appear to be, Newtonian, unstructured, and usually clear micellar solutions. However, the distinctive peaks are consistent with the presence of a hexagonal or lamellar structure, usually with a strong peak in the 4.5 to 6.5 nm region (sometimes up to 10nm). The compositions may possibly represent a microdispersed mesophase structure. We believe that the evidence is consistent with a dispersion of small, e.g. possibly less than 0.1 micron, particles of M-phase or possibly G-phase or concentric spherulites. The compositions exhibit excellent washing properties, and can be formulated at viscosities similar to those of conventional solvent containing liquid detergents.

If sufficient of a surfactant-desolubiliser, e.g. a surfactant desolubilising electrolyte is dissolved in the composition, the surfactant forms a stable, opaque, thixotropic system e.g. a spherulitic composition capable of suspending solid particles e.g. of builders. These compositions have substantially higher concentrations of surfactant than conventional built liquid detergents.

Our invention therefore provides a liquid composition comprising :
(1) Water
(2) surfactant, and
(3) dissolved surfactant desolubilising electrolyte,
characterised in that
(A) said surfactant (2)
   (i) is capable in the absence of electrolytes of forming a pourable phase which exhibits hexagonal symmetry at a concentration in water of c; and
   (ii) is present the proportion c based on the total weight of surfactant and water,
(B) said dissolved surfactant desolubilising electrolyte is present in said composition in a quantity sufficient to produce :-
   (i) a Newtonian liquid, and/or
   (ii) a substantially optically isotropic composition, or
   (iii) a stable spherulitic composition capable of suspending solids.

According to a second embodiment our invention provides a liquid detergent composition comprising:
(1) Water
(2) from 30 to 55% or surfactant, based on the total weight of surfactant and water, said surfactant comprising
   (i) at least 10%, based on the total weight of the composition, of at least one anionic surfactant which is capable of forming a first 20% by weight L₁ micellar solution with water which first micellar solution has a cloud point below 0° C, and
   (ii) at least 25%, based on the total weight of surfactant, of surfactants selected from anionic surfactant which are capable of forming a second 20% by weight micellar solution with water which second micellar solution has a cloud point greater than 0°C, and
   (iii) non-ionic surfactants having an HLB between 6 and 16; and
(3) sufficient surfactant-desolubilising electrolyte to form an optically isotropic Newtonian liquid, having an X-ray diffraction peak between 4 and 10 nm and a viscosity less than 1.5 Pa.s.

According to a third embodiment our invention provides a built spherulitic liquid detergent composition comprising:-
(1) Water
(2) from 30 to 55% of surfactants based on the total weight of water and surfactant, said surfactant comprising
   (i) at least 10%, based on the total weight of the composition of anionic surfactant capable of forming a first 20% micellar solution is water which first solution has a cloud point below 0°C, and
   (ii) at least 25% based on the total weight of surfactant, or surfactants selected from anionic surfactants which are capable of forming a second 20% L₁ micellar solution in water which second solution has a cloud point greater than 0°C, and
   (iii) non-ionic surfactants having an HLB between 6 and 16;
(3) sufficient surfactant desolubilising electrolyte to form a stable, solid-suspending, spherulitic surfactant system; and
(4) from 10 to 30% of zeolite, based on the total weight of the composition.

According to a further aspect our invention provides a liquid detergent composition comprising:
(a) A surfactant mixture consisting of at least one relatively soluble surfactant, e.g. one having a cloud point below 0°C at 20% concentration, such as an alkyl ether sulphate or olefin sulphonate and at least one relatively insoluble surfactant, said relatively insoluble surfactant preferably comprising a non-ionic ethoxylate and/or anionic surfactant, said mixture being capable of forming a pourable hexagonal phase at concentrations below 50% total surfactant and being present in a total proportion, sufficient, in the absence of added electrolyte, to form said pourable hexagonal phase and
(b) Sufficient of an electrolyte dissolved in said detergent composition to convert said composition into a substantially Newtonian and preferably substantially optically isotropic liquid.

According to a further aspect our invention provides a composition comprising :
(a) from 30 to 45% of total surfactant, based on the total weight of surfactant and water, said surfactant comprising from 20 to 50%, *by* weight of said total surfactant, of alkyl polyethyleneoxy sulphate, from 20 to 50% by weight of said total surfactant of soap and from 2 to 15% by weight of said total surfactant of polyethyleneoxy nonionic surfactant together optionally with minor amounts of other anionic surfactants; and
(b) from 2 to 10% *by* weight of electrolyte preferably comprising a potassium salt.

The surfactants are typically present in a total concentration of from 30 to 55% based on the total weight of surfactant and water more usually 35 to 50% e.g 38 to 45%. We prefer that surfactants are present in proportions of from 25% to 45% based on the total weight of the composition e.g. 28% to 42%.

The surfactants for use according to our invention are typically mixtures comprising a "soluble" surfactant, especially one that forms well defined M-phases, G-phases such as an alkyl ether sulphate. In order to provide a good laundry detergent, and in order to obtain a stable spherulitic suspending medium, it is preferred that the surfactant additionally comprises a relatively "insoluble" surfactant, especially one that forms an L₂-phase, such as a non-ionic surfactant with relatively low HLB, and/or an anionic surfactant with a cloud point above 0°C, e.g. sodium alkyl benzene sulphonate and/or a sodium soap.

The term "solubility" is often used in relation to surfactant in a slightly different sense from its normal meaning. Many detergent surfactants are miscible with water in most proportions to form homogeneous compositions. Nevertheless some, such as alkyl ether sulphates, are commonly recognised as being more "soluble" than others such as sodium alkyl benzene sulphonates. Solubility may be recognised in terms of a low cloud point of a relatively concentrated e.g. 20% L₁ solution; or in terms of high solubility in aqueous electrolyte. The latter can be expressed either as the amount of surfactant which can be added to a given solution of electrolyte without causing turbidity or phase separation, or conversely the amount of electrolyte that can be added to an L₁ solution of surfactant at a given concentration without producing the same effects. Another indication of high solubility is a high critical micellar concentration i.e. the minimum concentration at which the surfactant forms micelles and below which it exists as a true solution.

A 20% aqueous L₁ micellar solution of the more soluble surfactant for use according to our invention preferably has a cloud point below 0°C especially below -2°C most preferably below -5°C. According to one preferred embodiment the more soluble surfactant exhibits a well defined M-phase in binary mixtures with water. According to another embodiment the more soluble surfactant forms a G-phase at an appropriate concentration, wherein the upper concentration at which said G-phase is formed has a value of at least 10 percentage points higher than the minimum concentration at which said G-phase is formed, expressed as a weight percentage of said surfactant. According to a further embodiment the more soluble surfactant forms a 15% micellar solution which does not become turbid or undergo phase separation on addition of 5% dissovled sodium chloride at 20°C.

The less soluble component of the surfactant mixture is preferably one which has a cloud point in an 20% aqueous micellar solution above -2°C e.g. above 0°C especially above 5°C or (in the case of non-ionic ethoxylates) an inverse cloud point below 30°C e.g. below 20°C. According to a particular embodiment the surfactant mixture comprises a second less soluble component which is capable of forming an L₂-phase, in binary mixtures with water. According to a further embodiment the less soluble component does not dissolve in water to form a clear micellar solution containing 20% by weight of surfactant at 20°C.

The surfactant mixture preferably comprises at least 20% especially 20 to 75%, more preferably 25% to 50% most preferably 29% to 40%, of the at least one relatively soluble surfactant based on the total weight of the surfactant. Typically we have found that concentrations above about 8% of the more soluble surfactant, based on the total weight of the composition, are required, especially more than 10%, preferably more than 12%. Preferably the soluble surfactant comprises anionic surfactants such as alkyl ether sulphates, triethanolamine soaps, potassium, ammonium or organic substituted ammonium olefin sulphonates or paraffin sulphonates, ammonium or alkylammonium, e.g. ethanolamine alkyl sulphates or triethanolamine alkyl benzene sulphonates.

The preferred soluble surfactant is alkyl ether sulphate which is preferably the product obtained by ethoxylating a natural fatty or synthetic C₁₀₋₂₀ e.g. a C₁₂₋₁₄ alcohol with from 1 to 20, preferably 2 to 10 e.g. 3 to 4 ethyleneoxy groups, reacting the ethoxylated product with a sulphating agent and neutralising the resulting alkyl ether sulphuric acid with a base. The term also includes alkyl glyceryl sulphates, alkyl glyceryl polyethoxy sulphates, alkyl polypropoxy sulphates and random or block copolymerised alkyl ethoxy/propoxy sulphates. The cation is typically sodium but may alternatively be potassium, lithium, calcium, ammonium, or an alkyl ammonium ion having up to 6 aliphatic carbon atoms including monoethanolammonium, diethanolamonium, and triethanolammonium, trimethylammonium, tetramethyl ammonium and triethylammonium. Ammonium and ethanolammonium salts are generally more soluble than the sodium salts. Thus sodium alkyl benzene sulphonates can be used as the less soluble component of our surfactant mixture whereas triethanolamine alkyl benzene sulphonates may constitute the more soluble component. In addition to, or instead of, the alkyl ether sulphate, soluble component may comprise, for example, a C₁₀₋₂₀ e.g. C₁₂₋₁₈ especially C₁₂₋₁₄ or C₁₄₋₁₈ olefin sulphonate, a C₁₀₋₂₀ e.g. C₁₂₋₁₈ potassium, ammonium or amine paraffin sulphonate or C₁₀₋₂₀ e.g. C₁₂₋₁₈ ammonium or amine alkyl sulphat, especially an ammonium or mono-, di- or tri-ethanolammonium alkyl sulphate, or a triethanolamine soap or alkyl benzene sulphonate.

The surfactant may preferably comprise a C₈₋₂₀, e.g. C₁₀₋₁₈ aliphatic soap. The soap may be saturated or unsaturated, straight or branched chain. Preferred examples include dodecanoates, myristates, stearates, oleates, linoleates, linolenates and palmitates and coconut and tallow fatty acids and their water soluble salts.

The cation of the soaps may be sodium, if the soap is to constitute at least part of the less soluble component of the surfactant, or any of those discussed above in relation to the ether sulphates. However we particularly prefer to include ethanolamine soaps and especially triethanolamine soaps, which have been found to give particularly good cold storage and laundering properties, as part of the soluble component.

According to one embodiment, the soap and/or carboxylic acid is preferably present in a total weight proportion, based on the total weight of surfactant, of at least 20%, more preferably 20 to 75%, most preferably 25 to 50%, e.g 29 to 40%.

The surfactant may include other anonic surfactants such as, taurides, isethionates, ether sulphonates, aliphatic ester sulphonates, or less preferably sulphosuccinates or sulphosuccinamates. Preferably the other anionic surfactants are present in a total proportion of less than 45% by weight, based on the total weight of surfactants, more preferably less than 40% most preferably less than 30% e.g less than 2%.

The surfactant preferably contains one or preferably more, non-ionic surfactants. These preferably comprise ethoxylated C₈₋₂₀ preferably C₉₋₁₈ alcohols, ethoxylated with 2 to 20 especially 2.5 to 15 ethyleneoxy groups. The alcohols may be fatty alcohols or synthetic e.g. branched chain alcohols. Preferably the non-ionic component has an HLB of from 6 to 16.5, especially from 7 to 16 e.g. from 8 to 15.5. We particularly prefer mixtures of two or more non-ionic surfactant having an aggregate HLB in accordance with the above values.

Other ethoxylated non-ionic surfactants which may be present include C₆₋₁₅ alkylphenol ethoxylates, ethoxylated fatty acids, ethoxylated amines and ethoxylated alkyl sorbitan and/or glyceryl esters.

Other non-ionic surfactants which may be present include amine oxides and fatty alkanolamides such as coconut monethanolamide, and coconut diethanolamide.

The proportion by weight of non-ionic surfactant is preferably at least 2% and usually less than 40% more preferably less than 30% e.g 3 to 25% especially 5 to 20% based on the total weight of surfactant.

The surfactant may optionally comprise minor amounts of amphoteric and or cationic surfactants, for example betaines, imidazolines, amidoamines, quaternary ammonium surfactants and especially cationic fabric conditioners having two long chain alkyl groups, such as tallow groups.

The pourable hexagonal phase compositions of our invention typically exhibit a sharp principal X-ray/neutron diffraction peak at between 4 and 6 nm d spacing together with higher order peaks at Q values √3 and 2 times the Q value of the principal peak.

The liquid detergent compositions of our invention preferably comprise sufficient electrolyte to provide a substantially optically isotropic solution. This may comprise spherical or rod shaped surfactant micelles, and/or a micro dispersed mesophase comprising small particles of M-phase, spherulites and/or possibly G-phase, dispersed in an aqueous continuum. It may be a mobile , possibly Newtonian liquid, usually with a viscosity in the range 0.1 to 0.7 Pa.s preferably 0.2 to 0.5 Pa.s. The detergent may contain opacifiers or other additives to modify its appearance. However, in the absence of non-surface active additives it is typically substantially clear or slightly hazy and shows no appreciable birefringence. It may be readily diluted with, or dispersed in, water, and does not form visible intermediate mesophases. The detergents typically exhibit some small angle X-ray scattering, together with a distinct, fairly broad peak at between 4 and 7 nm. Typically the detergents show a slight increase in viscosity on dilution with small amounts of water. This may reflect a change in the shape of the dispersed microparticles of mesophase, becoming less spheroidal and more rod-like in character. Typically our detergent compositions have a viscocity of from 0.4 to 1.5 Pa.s, with a minimum viscosity at about 35 to 40% surfactant based on the total weight of surfactant and water.

Apart from surfactants and electrolyte the detergents preferably contain minor additives such as enzymes, dyes, perfume, opacifiers, antifoams, preservatives, soil suspending agents and, where desired to improve viscosity hydrotropes. Solvents are preferably absent or present in amounts less than 5% by weight e.g. less than 3% especially less than 2% most preferably less than 1%.

It is preferred that the electrolyte should comprise basic electrolytes such as sodium or potassium carbonates and/or silicates. These have the advantage of maintaining an alkaline pH in wash liquor, and of functioning as builders.

Other electrolytes which may be present include such builders as citrates, nitrilotriacetates, ethylene diamine tetracetates, as well as neutral salts such as chlorides, bromides, formates, acetates and nitrates or buffers such as borates.

Mainly for cost reasons, we prefer to use sodium salts, although it may be desirable to include potassium salts in the electrolyte to obtain lower viscosities. Lithium and caesium salts have also been tested successfully, but are unlikely to be used in providing phosphate-free compositions. Phosphonates, such as acetodiphosphonic acid salts or amino methylene phosphonates, including amio tris (methylenephosphonates), ethylene diamine tetrakis (methylene phosphonates) and diethylene triamine pentakis (methylene phosphonates), may also be used.

The electrolyte may be present in concentrations up to saturation or to that at which it salts surfactant out of solution to produce turbidity, but we prefer that it should not exceed its saturation concentration at 0°C. For this reason the electrolyte should not contain substantial proportions e.g more than 2% by weight of sodium sulphate. Preferably the sodium sulphate content is below 1% by weight. The total electrolyte concentration is typically between 2 and 15% by weight, more usually 3 to 10% e.g 4 to 5%, based on the total weight of the composition. Concentrations of dissolved electrolyte above that which causes turbidity are required to form solid suspending systems.

The solid suspending system of our invention may for example have a structure substantially as described in EP 086614, EP 170091 and/or EP 151884. The compositions may be prepared and formulated substantially in accordance with the general teaching of the aforesaid European Patents, but using the surfactants and surfactant concentrations as taught herein.

Thus the condvuctivity of the isotropic solution may be measured, as electrolyte is progressively added. When turbidity is observed and the conductivity passes through the first minimum, a series of formulations may be prepared with different concentrations of surfactant within the conductivity trough and tested by centrifuging at 20,000G in order to determine the optimum concentration for stability.

Typically the suspending system is spherulitic and exhibits X-ray diffraction peaks similar to those of the isotropic liquid compositions of our invention, but with less small angle scattering and a stronger lamellar peak. The suspending system is capable of suspending particles of pestitides for agricultural or horticultural application, weighting agents for use as oilfield drilling muds, e.g. calcite or barite, pigments or disperse dyes for use in dyebaths or as printing pastes. The compositions of our invention may also find application as cutting fluids, lubricants, hydraulic fluids, heat transfer fluids or in similar functional fluids. We particularly prefer that the solid suspending system contain particles of solid builders, to provide a fully built liquid detergent. The preferred builder is zeolite, but the builder may also comprise sodium tripolyphosphate or mixtures of zeolite and sodium tripolyphospthate. The builder may be present in concentrations up to 40% by weight of the composition e.g. 15 to 30%. The amount of dissolved electrolyte required (including any dissolved portion of the builder) is typically between 8 and 20% e.g. 10 to 18% based on the total weight of the composition. The compositions may also contain inert abrasives for use as scouring creams.

For the purpose of this specification an electrolyte means any water soluble compound which is not a surfactant and, which ionises in solution. Preferred are electrolytes which tend to salt a surfactant out of solution when each are present in sufficiently high contentration.

The pH of the composition may be neutral but is preferably alkaline, e.g. 7 to 12, more preferably 8 to 12, most preferably 9 to 11.

Compositions of our invention may optionally contain small amounts of hydrotropes such as sodium xylene sulphonate, sodium toluene sulphonate or sodium cumene sulphonate, e.g in concentrations up to 5% by weight based on the total weight of the composition, preferably not more than 2% e.g 0.1 to 1%. Hydrotypes tend to break surfactant structure and it is therefore important not to use excessive amounts. They are primarily useful for lowering the viscosity of the formulation, but too much may render the formulation unstable.

The compositions of our invention may comprise conventional detergent additives such as soil suspending agents (typically sodium carboxymethyl cellulose), optical brightener, sequestrants, antifoams, enzymes, enzyme stabilisers, preservative, dyes, colourings, perfumes, fabric conditioners, e.g. cationic fabric softeners or bentonite, opacifiers or chemically compatible bleaches. We have found that peroxygen bleaches, especially bleaches that have been protected e.g. by encapsulation, are more stable to decomposition in formulations according to our invention than in conventional liquid detergents.

The compositions may contain solvents, however, like hydrotropes, solvents tend to break surfactant structure. Moreover, again like hydrotropes, they add to the cost of the formulation without substantially improving the washing performance. They are moreover undesirable on environmental grounds and the invention is primarily of value in providing solvent-free compositions. We therefore prefer that the isotropic liquid compositions contain less than 6%, more preferably less than 5% most preferably less than 3%, especially less than 2%, more especially less than 1%, e.g. less than 0.5% by weight of solvents such as water miscible alcohols, or glycols, based on the total weight of the composition. We prefer that the composition should essentially be solvent-free.

Detergent compositions or suspending media of our invention may be prepared by obtaining the surfactant mixture at a concentration in water at which it forms a pourable hexagonal phase and adding to the it sufficient of the electrolyte to convert the opalescent, thixotropic hexagonal phase into a clear, mobile, optically isotropic, Newtonian solution, or sufficient to convert the latter into an opaque suspending medium. However, we prefer to avoid formation of the hexagonal phase by adding the electrolyte to the ether sulphate or other soluble surfactant, prior to mixing the latter with the less soluble surfactants.

The invention is illustrated by the following examples in which all proportions are percentages by weight based on the total weight of the composition. The compositions set out in the following tables 2, 3 and 4, other than example 20, whith is comparative, were all mobile liquids with excellent washing performance. The balance in each case was water.

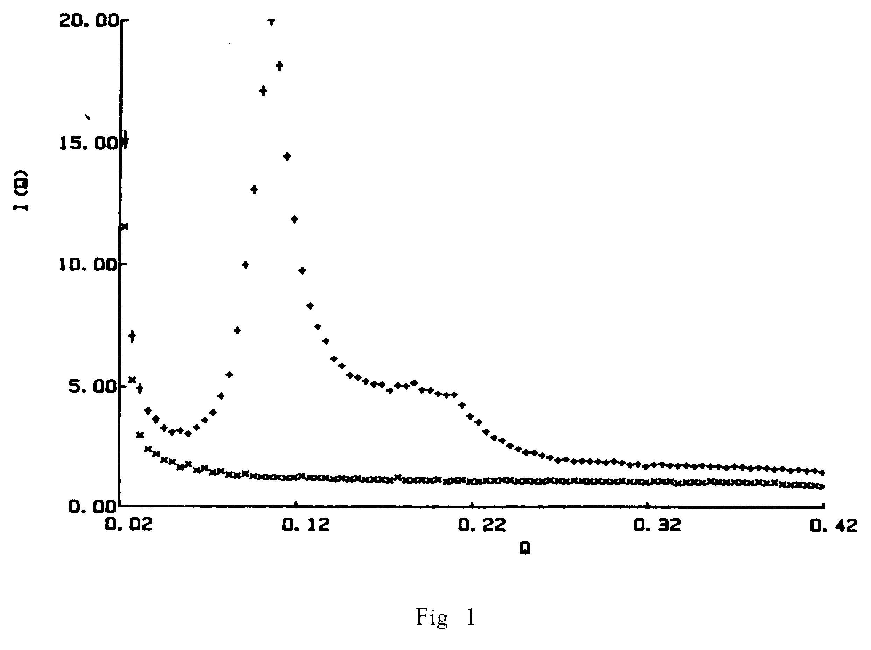

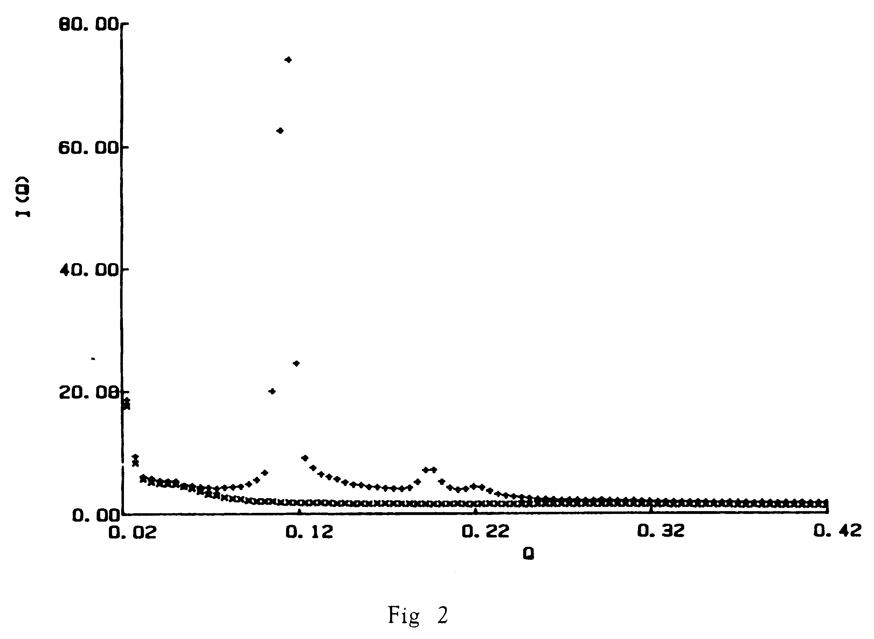

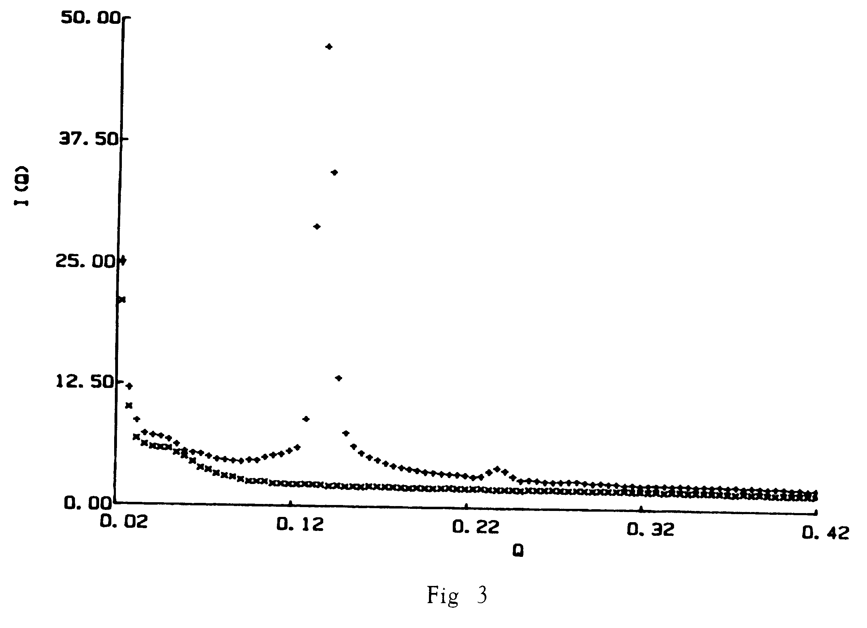

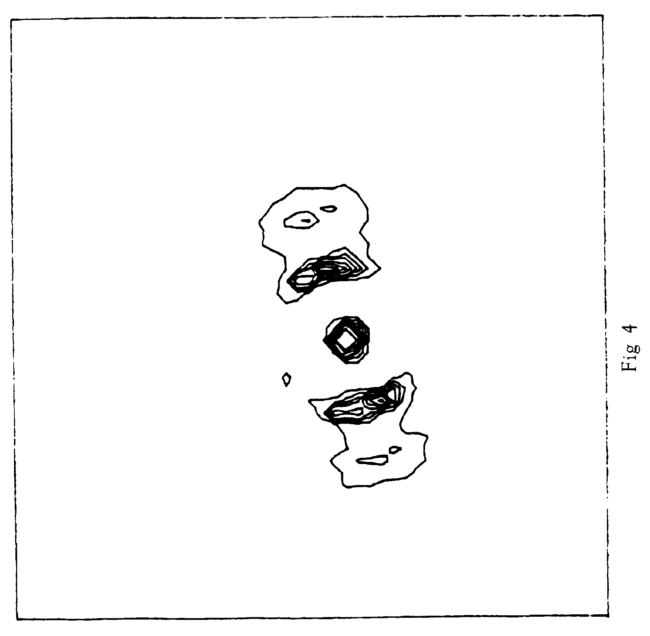

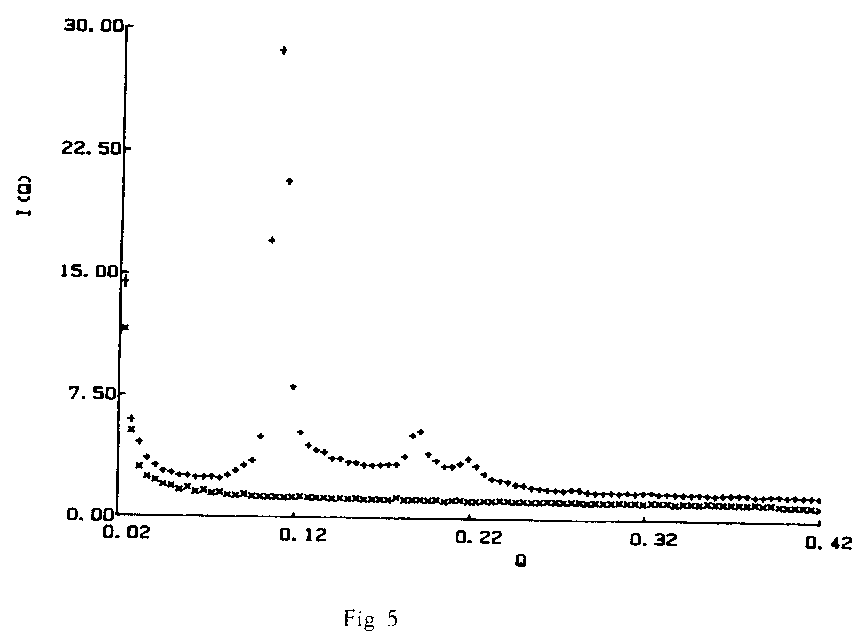

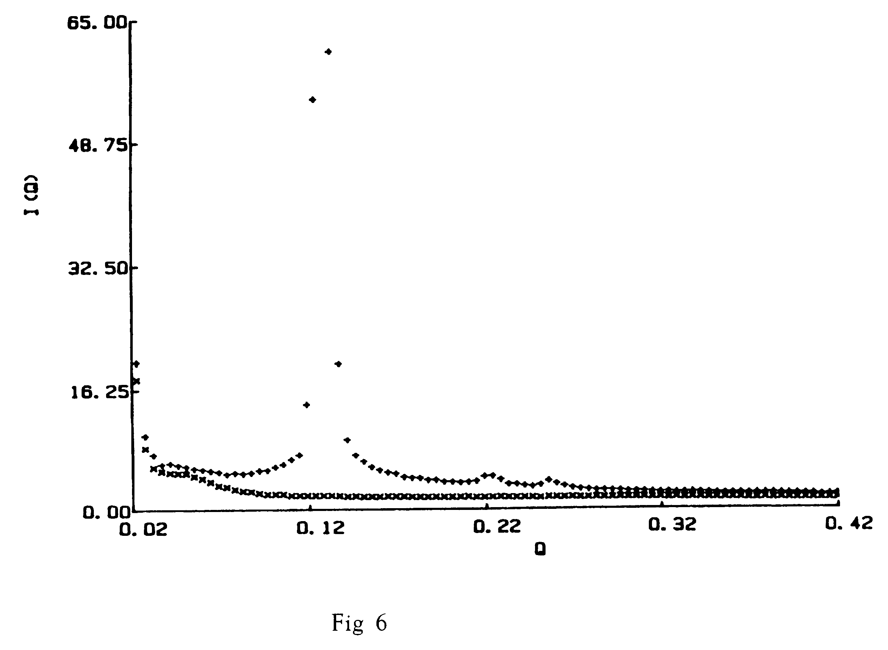

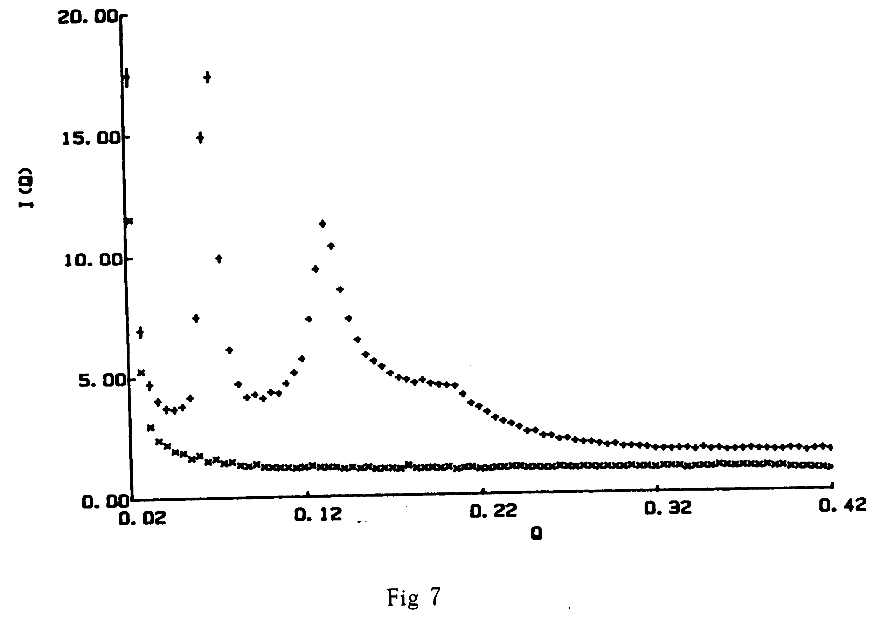

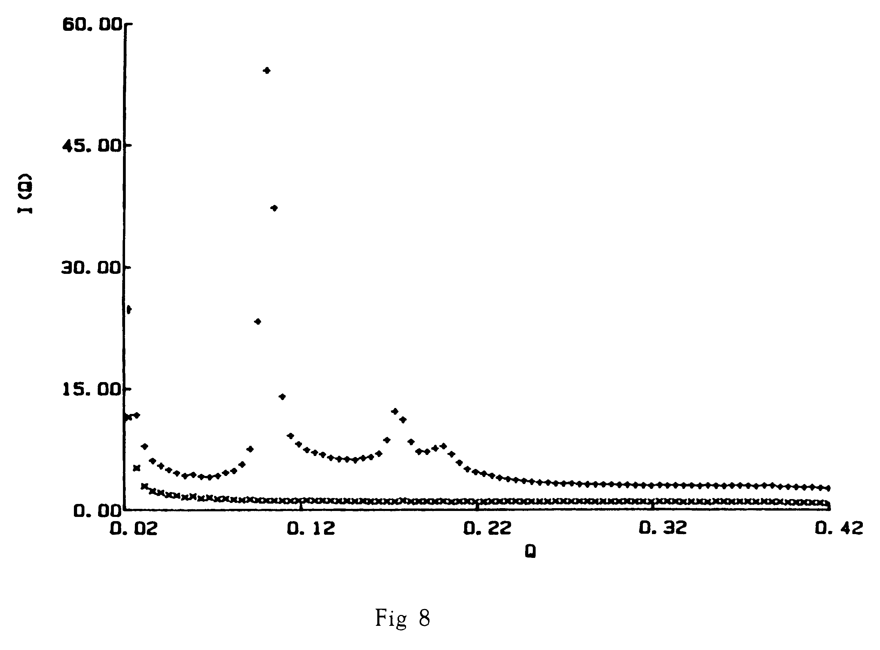

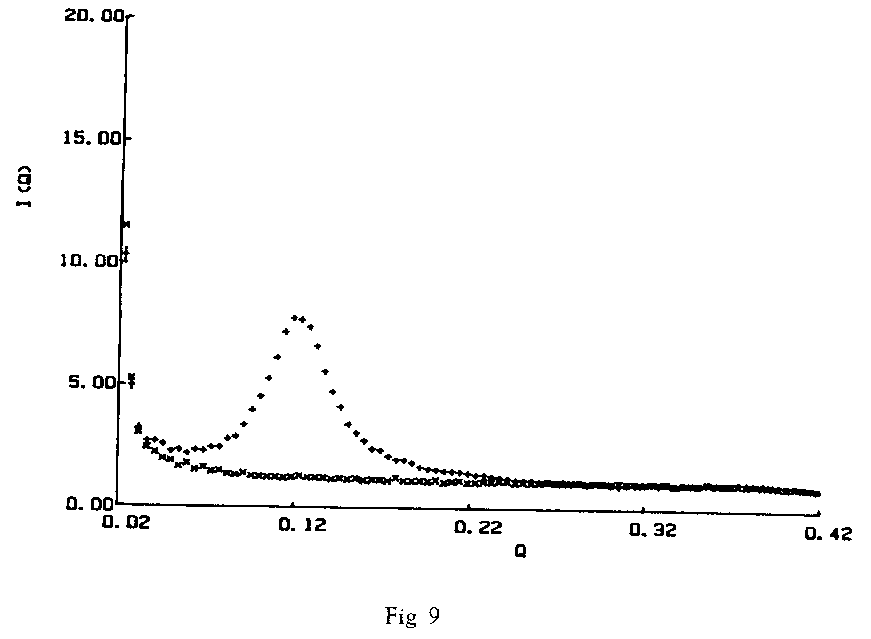

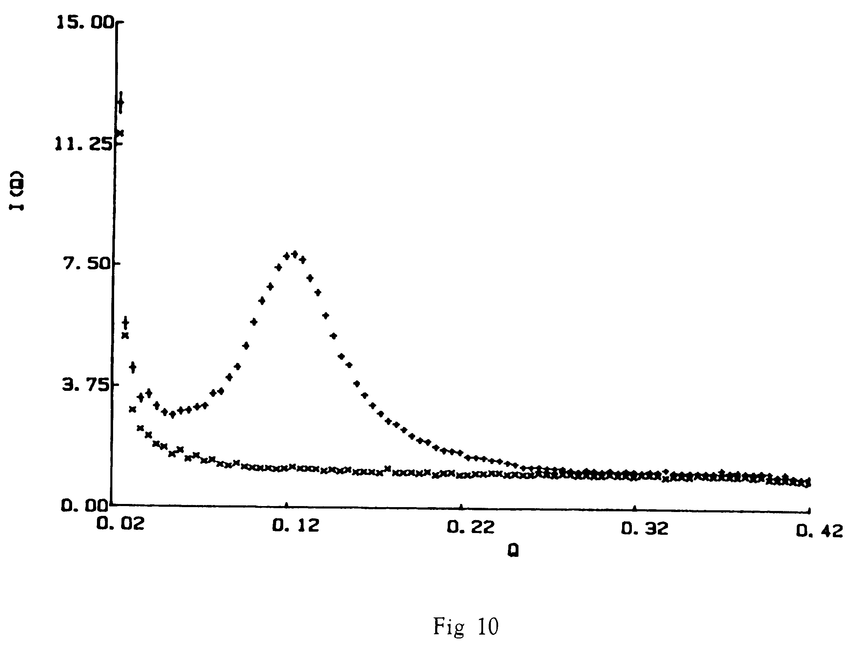

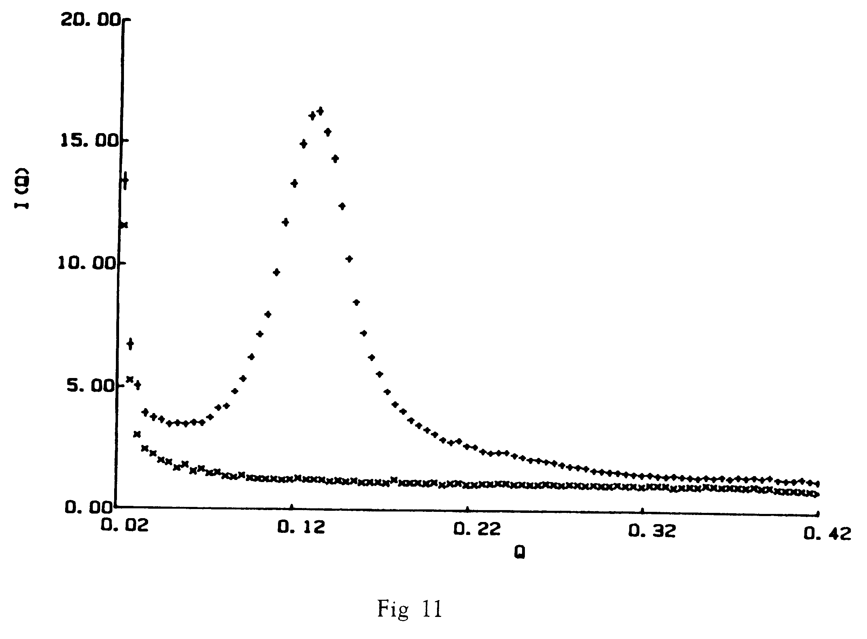

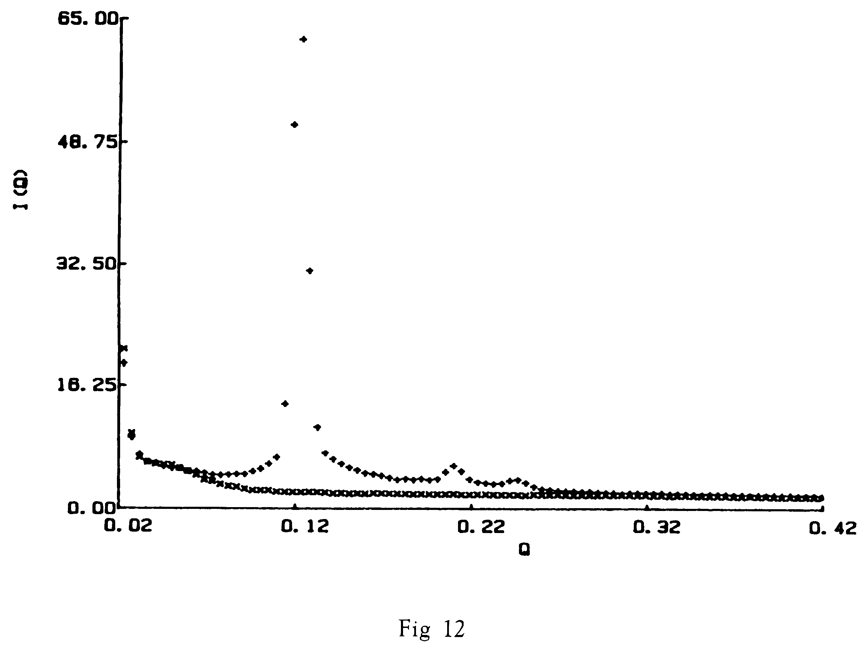

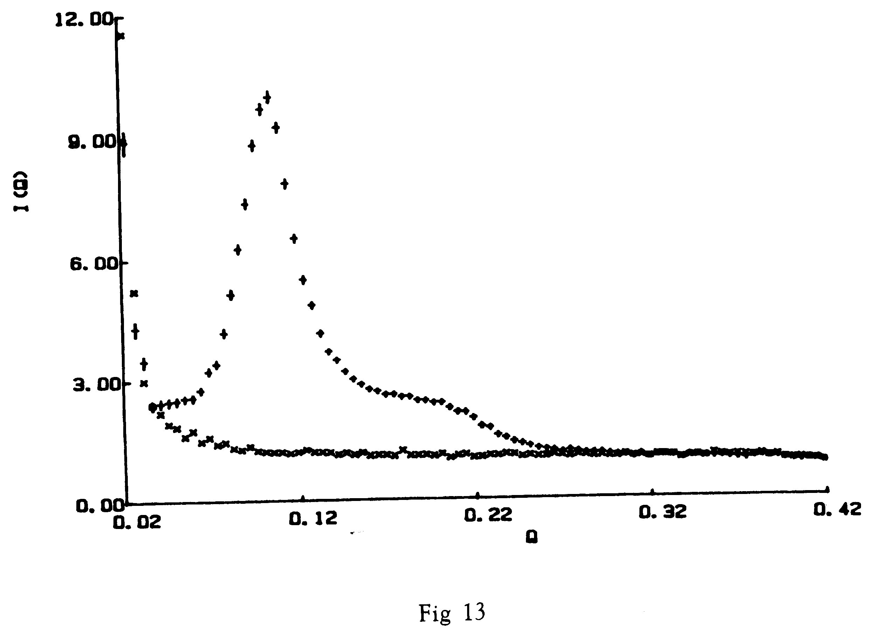

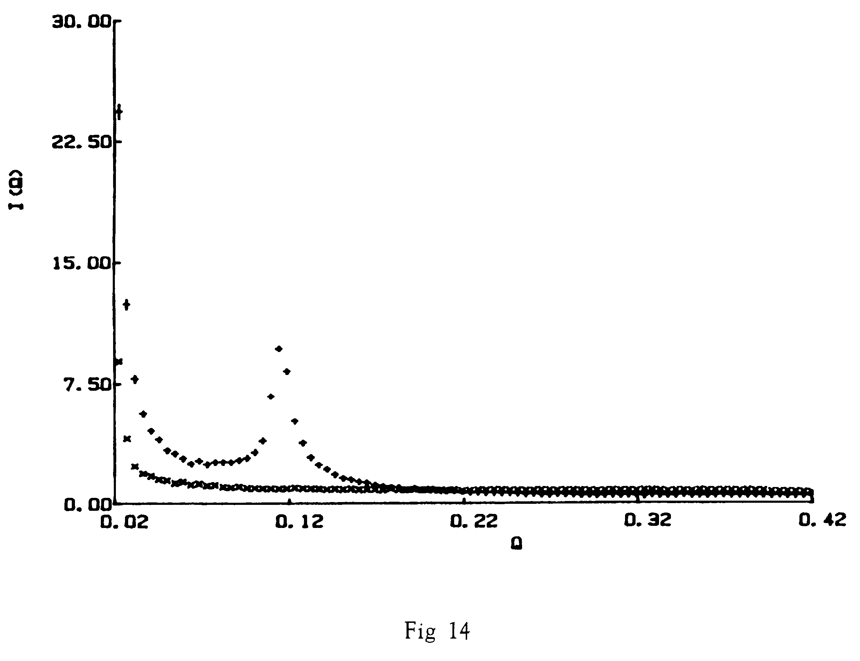

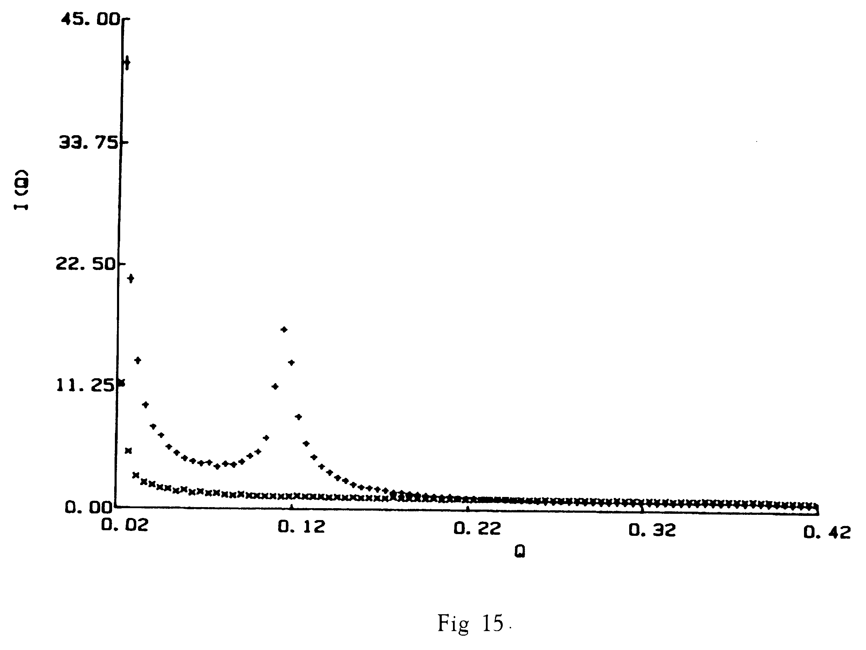

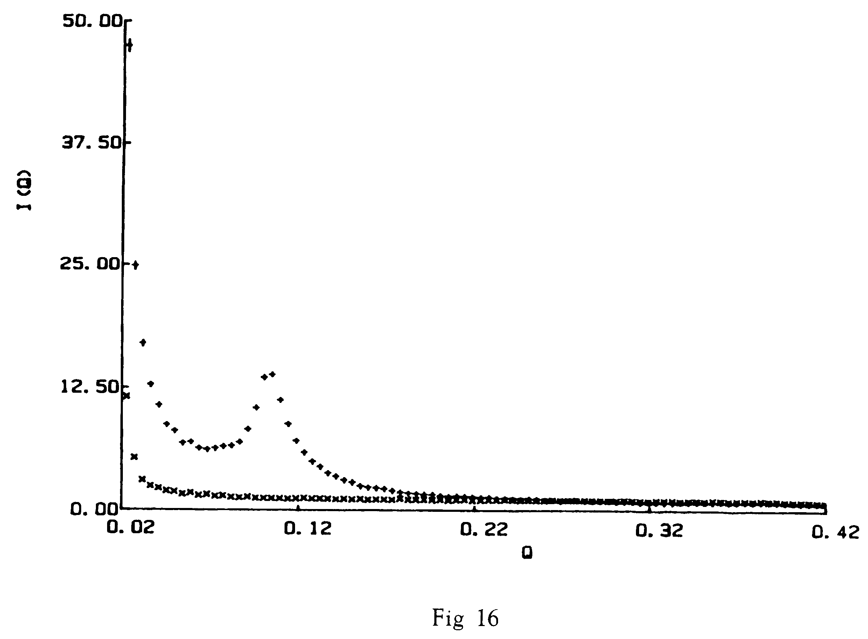

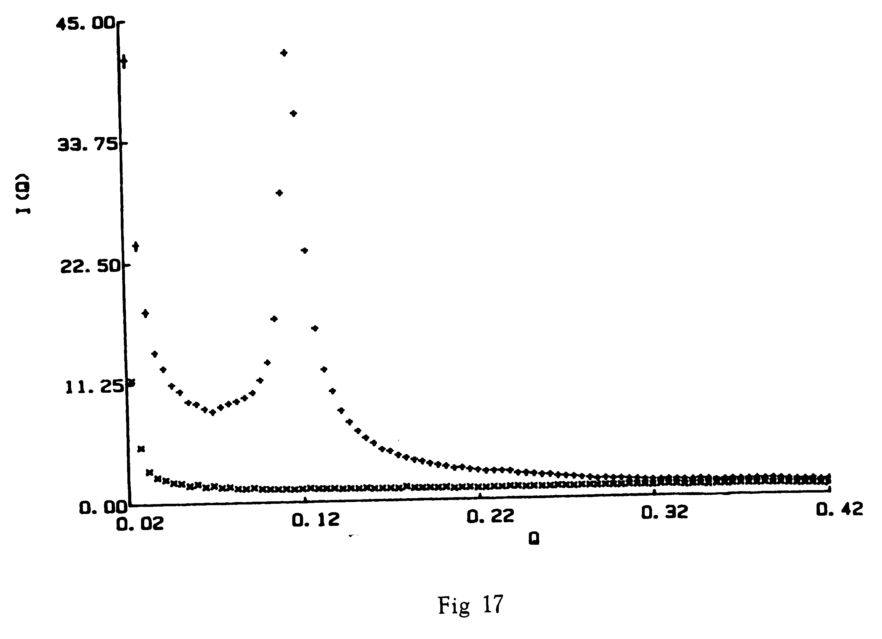

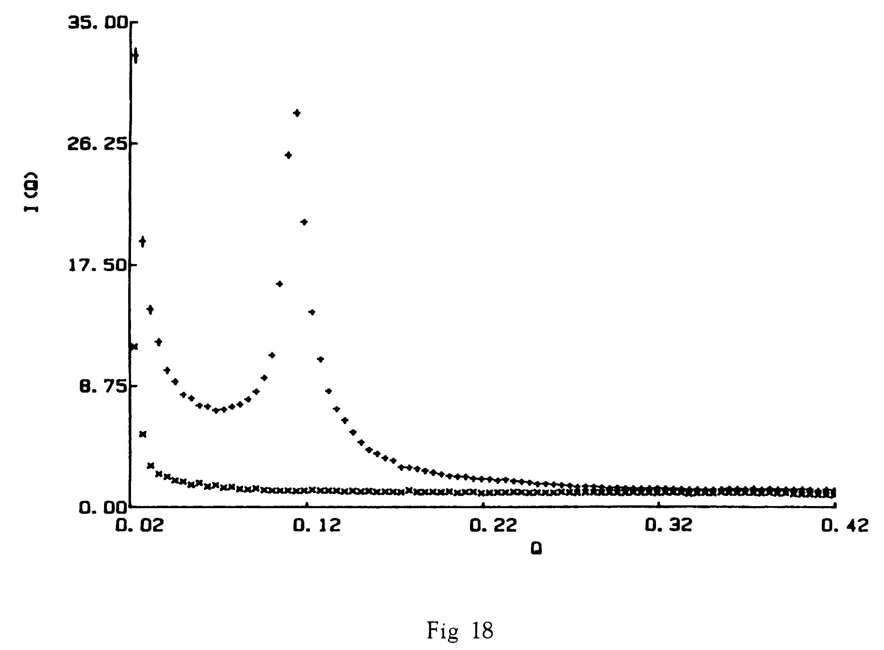

Certain of the compositions were examined by small angle X-ray diffraction. In the case of Examples 6, 8, 11, 12 and 13 the X-ray spectrum was plotted based on the pourable, hexagonal phase composition i.e. the composition as shown in the Tables but without the addition of the electrolyte (sodium carbonate). In the case of Examples 14 and 15, sufficient sodium hydroxide was included to neutralise the free acids. All other X-ray diffraction examples are based on the complete formulations as given. The drawings, Figs. 1 to 18 are plots of the X-ray diffraction spectra as set out in Table 7. Fig. 4 is a contour plot which illustrates an alignment of scattering. In most other cases the scattering was evenly distributed around the unscattered beam. In each of the drawings "+" plots are of the sample and "X" plots were of the empty sample tell plotted alongside the sample for comparison. In each case a large peak was visible having a momentum transfer value corresponding to the presence of a repeating structural feature with a repeat spacing between 4 and 10nm.

In the case of the electrolyte-free (pourable hexagonal phases), there were two substantially smaller peaks at respectively 1/√3 and half the spacing of the first peak, which we attribute to higher order effects. Even higher order peaks are detectable in some samples. These spacings are attributable to a hexagonal symmetry.

In the case of Example 14, the addition of sodium hydroxide has forced a change in the structure. A peak corresponding to a structural feature with a repeat spacing of 9.4 nm is accompanied by second and third order peaks, indicating a lamellar structure.

The clear isotropic liquids, Examples 16, 17 and 18, each display a single relatively broad peak with no clear evidence of higher order scattering. Example 19 shows some indication of a second order scattering, suggesting the presente of a lamellar or spherulitic structure.

The spherulitic suspending media, Examples 23 and 24 are zeolite containing built detergent liquids. Examples 21 and 22 each gave a stronger, sharper main peak than the clear liquids, but with no clear higher order features. The electron and optical micrographs show them to comprise well-defined spherulites.

In the tables the abbreviations have the following meanings:

**TABLE 1**

| | |
|---|---|
| LABS | is sodium C₁₀₋₁₄ alkyl benzene sulphonate; |
| KSN | is sodium C₁₂₋₁₆ alkyl three mole ethyleneoxy sulphate; |
| OB | is lauryl/myristyl trimethyl amine oxide; |
| CDE | is coconut diethanolamide; |
| CME | is coconut monoethanolamide; |
| KCMP | is C₁₂₋₁₄ alcohol with 10 mole average ethylene/propylene oxide; |
| SDTP | is sodium diethylenetriamine penta(methylenephosphonate); |
| CBS/X | is a proprietary optical brightner sold **by Ciba Geigy** under their Registered Trademark "TINOPAL CBS/X"; |
| SXS | is sodium xylene sulphonate, 93% active; |
| KL 6 | is cetyl/oleyl alcohol six mole ethoxylate; |
| KCn (n=3 or 8) | is lauryl alcohol n mole ethoxylate |
| LP 2 | is coconut monoethanolamide two mole ethoxylate; |
| 91-2.5 | is a C₉₋₁₁ alcohol with 2.5 moles average ethylene oxide; |
| 91-5.0 | is C₉₋₁₁ alcohol with 5 moles average ethylene oxide; |
| 23-6.5 | is C₁₂₋₁₃ alcohol with 6.5 moles average ethylene oxide; |
| 91-8.0 | is C₉₋₁₁ alcohol with 8 moles average ethylene oxide; |
| 91-12 | is C₉₋₁₁ alcohol with 12 moles average ethylene oxide; |
| D190 | is a silicone surfactant sold by DOW under their Registered Trade Mark "DOW 190". |
| PK | is a refined palm kernel fatty acid sold under the Registered Trade Mark "PRIFAC" 7908 |
| 621 | is an opacifier comprising aqueous styrene, acrylic emulsion. |
| 455 | is lauric acid with 9 moles ethylene oxide. |
| LX | is sodium lauryl sulphate. |

**TABLE 2**

| | **[1]** | **[2]** | **[3]** | **[4]** | **[5]** | **[6]** |
|---|---|---|---|---|---|---|
| Calcium Acetate | 0.1 | 0.1 | 0.1 | 0.1 | 0.1 | 0.1 |
| SXS | 0.5 | 0.5 | 0.5 | 0.5 | 0.5 | 0.5 |
| CBS/X | 0.2 | 0.15 | 0.15 | 0.15 | 0.2 | 0.2 |
| KSN | 11.0 | 11.0 | 11.0 | 11.0 | 12.0 | 12.0 |
| LABS | 4.5 | 3.0 | 3.0 | 4.0 | 5.0 | 5.0 |
| Triethanolamine | 4.5 | 4.5 | 3.5 | 4.5 | 5.0 | 5.0 |
| Potassium Carbonate | 6.0 | 4.0 | 6.0 | - | - | - |
| Sodium Carbonate | - | 2.0 | - | 6.0 | 4.6 | 4.6 |
| SDTP | 0.9 | 0.9 | 0.9 | 0.9 | 1.0 | 1.0 |
| 91-12 | 1.8 | 1.3 | 1.3 | 1.3 | 2.0 | 2.0 |
| 91-2.5 | 3.6 | 3.0 | 3.0 | 3.0 | 4.0 | 4.0 |
| OB | 0.9 | 0.45 | 0.45 | 0.45 | - | - |
| PK | 9.0 | 9.0 | 7.0 | 9.0 | 10.0 | 10.0 |
| 621 | 0.5 | 0.5 | 0.5 | 0.5 | 0.5 | - |
| KCMP | - | 1.0 | - | 1.0 | - | - |
| Protease | 0.2 | 0.15 | 0.15 | 0.15 | 0.2 | 0.2 |
| Pigments | 0.004 | 0.001 | 0.004 | - | - | - |
| Formalin | 0.075 | 0.075 | 0.075 | 0.075 | 0.075 | 0.075 |
| Perfume | 0.5 | 0.3 | 0.5 | 0.5 | 0.4 | 0.4 |
| CDE | | | | | 1.0 | - |
| CME | - | - | - | - | - | 1.0 |
| Viscosity 20°C Brookfield RVT Spindle 4 Speed 100 | 350 | 400 | 330 | 370 | 520 | |
| Density 20°C gcm-3 | 1.07 | 1.08 | 1.07 | 1.09 | - | |
| 1% aq pH | 9.0 | 9.0 | 9.0 | 9.5 | 9.0 | |

**TABLE 3**

| | **[7]** | **[8]** | **[9]** | **[10]** | **[11]** | **[12]** |
|---|---|---|---|---|---|---|
| Calcium Acetate | 0.1 | 0.1 | 0.1 | 0.1 | - | - |
| SXS | 0.5 | 0.5 | 0.5 | 0.5 | 1.5 | - |
| CBS/X | 0.2 | 0.2 | 0.2 | 0.2 | 0.2 | 0.2 |
| KSN | 12.0 | 12.0 | 12.0 | 12.0 | 13.0 | 12.0 |
| LABS | - | - | - | - | 7.0 | 6.0 |
| Triethanolamine | 5.0 | 5.0 | 5.0 | 5.0 | 5.0 | 5.0 |
| Sodium Carbonate | 4.8 | 4.5 | 4.5 | 4.7 | 4.5 | 4.2 |
| 91-12 | 2.0 | 2.0 | 2.0 | 2.0 | 4.0 | 6.0 |
| 91-2.5 | 4.0 | 4.0 | 4.0 | 4.0 | 4.0 | - |
| OB | - | - | - | - | - | - |
| PK | 10.0 | 10.0 | 10.0 | 10.0 | 10.0 | 10.0 |
| KCMP | 6.0 | - | - | - | - | - |
| Protease | 0.2 | 0.2 | 0.2 | 0.2 | - | - |
| Pigments | - | - | - | - | - | - |
| Formalin | 0.075 | 0.075 | 0.075 | 0.075 | - | - |
| Perfume | 0.4 | 0.4 | 0.4 | 0.4 | 0.2 | - |
| CME | - | 6.0 | - | - | - | - |
| 455 | - | - | 6.0 | - | - | - |
| LP2 | - | - | - | 6.0 | - | - |
| Viscosity 20°C Brookfield RVT Spindle 4 Speed 100 | 420 | 620 | 770 | 800 | | |
| Density 20°C gcm-3 | - | 0 | - | - | | |
| 1% aq pH | 9.0 | 9.0 | 9.0 | 9.0 | | |

**TABLE 4**

| **EXAMPLE** | **13** | **14** |
|---|---|---|
| LABS | 5.0 | 5.0 |
| KSN | 10.0 | 10.0 |
| 23-6.5 | 5.0 | 5.0 |
| 91-8.0 | 5.0 | - |
| Coco fatty acid | 10.0 | 10.0 |
| Triethanolamine | 5.0 | - |
| NaOH | - | 4.0 |
| Na₂CO₃ | 4.6 | - |
| CBS/X | 0.2 | 0.2 |
| Solids | 39.8 | 34.2 |
| Viscosity 100 RVT (Pa.s) | 0.48 | 0.18 |

### Example 15

| | **15** |
|---|---|
| LABS | 5.0 |
| KSN | 10.0 |
| 25-7 | 5.0 |
| Coconut fatty acid | 10.0 |
| CBS/X | 0.2 |
| Water | balance |
| sodium hydroxide | 4.03 |
| pH | 9.00 |
| 1% pH | 9.00 |

The foregoing Example was made by mixing the aqueous surfactants and optical brightener to form a pourable hexagonal phase [G-phase] and then adding the bases to form a clear, mobile, isotropic Newtonian liquid,

### Example 16

The following ingredients were mixed, the coconut fatty acid being added last to avoid forming a pourable hexagonal phase.

| | **%w/w** |
|---|---|
| LABS | 5 |
| KSN | 12 |
| 91-2.5 | 4 |
| 91-12 | 2 |
| OB | 1 |
| Coconut fatty acid | 10 |
| Triethanolamine | 5 |
| Potassium carbonate | 5.5 |
| SDTP | 1 |
| CBS-X | 0.2 |
| SX-93 | 0.5 |
| Perfume | 0.4 |
| Enzyme | 0.2 |
| Blue +Green dye | 0.42 |
| opacifier | 0.5 |

### Example 17

Example 16 was repeated using 12% w/w of C₁₂₋₁₆ x-olefin sulphonate instead of the KSN. A stable homogeneous product was obtained.

### Example 18

Example 16 was repeated using 12% w/w of sodium C₁₂₋₁₄ alkyl sulphate in place of KSN. A stable homogeneous product was obtained.

**Examples 19 to 24 were** prepared by mixing the ingredients set out in Table 5 in the order shown. The balance in each case was water.

Example 19 is fully formulated clear liquid detergent, Example 20 is the corresponding electrolyte-free, surfactant system, and is presented for comparison.

Examples 21 and 22 are stable, non-sedimenting spherulitic, zeolite-built detergents and Examples 22 and 24 are spherulitic suspending media, suitable for suspending a variety of solids including builders, abrasives, particles, pigments, disperse dyes, weighting agents, solid lubricants, powdered coal and the like.

Examples 25 to 30 are zeolite built, non-sedimenting, spherulitic detergents.

**TABLE 5**

| **EXAMPLE** | **19** | **20** | **21** | **22** | **23** | **24** |
|---|---|---|---|---|---|---|
| Ca acetate | 0.1 | - | - | - | - | - |
| CBS/X | 0.2 | - | 0.14 | 0.14 | 0.175 | 0.176 |
| KSN | 10.9 | 12.25 | 7.88 | 7.92 | 9.85 | 9.92 |
| D190 | - | - | 0.5 | - | 0.62 | - |
| Zeolite | - | - | 20.0 | 20.1 | - | - |
| LABS | 4.5 | 5.06 | 3.45 | 3.47 | 4.31 | 4.34 |
| SXS | 0.5 | 0.56 | 0.49 | 0.49 | 0.61 | 0.62 |
| Triethanolamine | 4.5 | 5.06 | 3.45 | 3.47 | 4.31 | 4.34 |
| K₂CO₃ | 6.0 | - | 3.93 | 3.95 | 4.91 | 4.99 |
| SDTP | 0.9 | 1.01 | 0.69 | 0.69 | 0.86 | 0.87 |
| 91-2.5 | 3.6 | 4.05 | - | - | - | - |
| 91-12 | 1.8 | 2.03 | - | - | - | - |
| KC3 | - | - | 3.94 | 3.96 | 4.92 | 4.95 |
| OB | 0.9 | 1.01 | 0.49 | 0.49 | 0.61 | 0.61 |
| PK | 9.0 | 10.13 | 6.9 | 6.93 | 8.62 | 8.68 |
| Latex opacifier | 0.5 | - | - | - | - | - |
| Enzyme | 0.2 | - | - | - | - | - |
| 1% aq Flex Blue | 0.2 | - | - | - | - | - |
| 1% aq Lev Green | 0.22 | - | - | - | - | - |
| Perfume | 0.5 | - | - | - | - | - |
| Formalin | 0.75 | - | - | - | - | - |
| Na₃ citrate 2H₂O | - | - | 11.0 | 11.05 | 13.75 | 13.84 |
| Silicone an- | 0.2 | 0.22 | 0.1 | 0.1 | 0.125 | 0.125 |
| tifoam | | | | | | |

**TABLE 6**

| **Examples of Compact Laundry Liquids** | | | | | | |
|---|---|---|---|---|---|---|
| | **[25]** | **[26]** | **[27]** | **[28]** | **[29]** | **[30]** |
| Calcium Acetate | - | - | - | 0.1 | 0.1 | 0.1 |
| CBS/X | 0.2 | 0.2 | 0.15 | 0.2 | 0.2 | 0.2 |
| KSN | 15.0 | 2.0 | 2.5 | 2.0 | 9.3 | 10.1 |
| D190 | 0.5 | 0.5 | 0.5 | 0.5 | 0.5 | 0.5 |
| Zeolite | 20.0 | 25.0 | 25.0 | 20.0 | 20.0 | 20.0 |
| LABS | 8.0 | 3.0 | 3.0 | 3.0 | 4.0 | 4.3 |
| SX | 0.5 | 0.5 | 0.5 | 0.5 | 0.5 | 0.5 |
| Triethanolamine | - | 3.0 | 3.0 | 3.0 | 2.0 | 0.5 |
| Potassium Carbonate | 7.5 | 4.0 | 4.0 | 4.0 | 7.5 | 7.5 |
| SDTP | - | - | 0.7 | - | - | - |
| KC3 | 3.0 | 4.0 | 4.0 | 4.0 | 4.0 | 4.0 |
| OB | - | - | - | - | - | - |
| PK | - | 6.0 | 6.0 | 6.0 | 4.0 | 1.0 |
| Trisodium Citrate | - | 10.0 | 10.0 | 10.0 | 4.0 | 4.0 |
| Dihydrate Tripotassium Citrate | - | 3.0 | 1.0 | 3.5 | - | - |
| Silicone Antifoam | 0.1 | 0.2 | 0.2 | 0.1 | 0.1 | 0.1 |
| LX | 3.0 | - | - | - | 3.0 | 6.0 |
| Protease | 0.4 | - | 0.4 | 0.4 | 0.4 | 0.4 |
| Perfume | 0.5 | 0.5 | 0.5 | 0.5 | 0.5 | 0.5 |
| Formalin | 0.075 | 0.075 | 0.075 | 0.075 | 0.075 | 0.075 |
| Viscosity 20°C Brookfield RVT Spindle 4 Speed 100 | 1800 | 1000 | 1300 | 900 | 800 | 800 |

**TABLE 7**

| Figure | Example | Main Peak (d-spacing nm) | Higher Order Peak nm | |
|---|---|---|---|---|
| | | | 1. | 2. |
| 1 | 6¹ | 5.89 | 3.37 | 2.98 |
| 2 | 8¹ | 5.69 | 3.33 | 2.87 |
| 3 | 11¹ | 4.59 | 2.65 | 2.23 |
| 4 | 12¹^{,}² | - | - | - |
| 5 | 12¹ | 5.76 | 3.32 | 2.86 |
| 6 | 13¹ | 5.03 | 2.83 | 2.48 |
| 7 | 14³ | 9.38 | 4.80 | 3.06 |
| 8 | 15³ | 6.24 | 3.61 | 3.15 |
| 9 | 16 | 5.23 | Not Observed | Not Observed |
| 10 | 17 | 5.08 | Not Observed | Not Observed |
| 11 | 18 | 4.8 | Not Observed | Not Observed |
| 12 | 16¹ | 5.08 | 2.69 | 2.57 |
| 13 | 19 | 6.09 | 2.94 | Not Observed |
| 14 | 20⁴ | 5.57 | Not Observed | Not Observed |
| 15 | 21 | 5.54 | Not Observed | Not Observed |
| 16 | 22 | 6.16 | Not Observed | Not Observed |
| 17 | 23 | 5.46 | Not Observed | Not Observed |
| 18 | 24 | 5.57 | Not Observed | Not Observed |

| | | | | |
|---|---|---|---|---|
| 1. No Electrolyte. | | | | |
| 2. Contour Plan of scattering distributions showing bilateral alignment. | | | | |
| 3. Sufficient base to neutralise fatty acids only. | | | | |
| 4. Comparative. | | | | |

### Example 31

This is an example of an isotropic liquid detergent using two relatively soluble surfactants at three different total surfactant concentrations.

| | **(a)** | **(b)** | **(c)** |
|---|---|---|---|
| KSN | 8.3 | 4.7 | 11.1 |
| Triethanolamine LABS | 21.7 | 27.3 | 28.9 |
| Sodium Carbonate | 3.0 | 3.5 | 4.0 |
| Total Surfactant | 30.0 | 35.0 | 40.0 |
| Viscosity Pa.s | 1 | 0.8 | 1.5 |

## Claims

1. A liquid composition comprising :-
(1) Water
(2) surfactant, and
(3) dissolved surfactant desolubilising electrolyte,
characterised in that
(A) said surfactant (2)
(i) is capable in the absence of electrolytes of forming a pourable phase which exhibits hexagonal symmetry at a concentration in water of c; and
(ii) is present in the proportion c based on the total weight of surfactant and water,
(B) said dissolved surfactant desolubilising electrolyte (3) is present in said composition in a quantity sufficient to produce :-
(i) a Newtonian liquid, and/or
(ii) a substantially optically isotropic composition, or
(iii) a stable spherulitic composition capable of suspending solids.

2. A liquid composition according to Claim 1 characterised in that said composition has a viscosity of less than 1.5 Pa.S., preferably less than 1 Pa.S.

3. A liquid composition according to either of Claims 1 or 2 characterised in that said composition comprises, based on the total weight of surfactant and water, at least 30% by weight of total surfactant, preferably 35% by weight of total surfactant.

4. A liquid composition according to any of Claims 1 to 3, characterised in that said composition in the absence of any non-surfactant opacifier, would be a substantially transparent fluid.

5. A liquid composition according to any of Claims 1 to 4 characterised in that said composition comprises at least 2% by weight of said dissolved surfactant desolubilising electrolyte, but below the saturation concentration of said electrolyte at 0° and below the concentration at which surfactant salts out to give turbidity and/or phase separation, preferably less than 15% by weight, most preferably less than 10% by weight.

6. A liquid composition according to any one of Claims 1 to 5 characterised in that said surfactant desolubilising electrolyte comprises a builder, preferably sodium or potassium citrate, carbonate, silicate, nitrilotriacetate and/or pyrophosphate.

7. A liquid composition according to any one of Claims 1, 2, 3, 5 characterised in that said composition contains suspended solid particles.

8. A liquid composition according to Claim 7 characterised in that said suspended solid particles are particles of a builder, whereby said composition is a built liquid detergent composition.

9. A built liquid detergent composition according to Claim 8 characterised in that said builder comprises zeolite and/or or sodium tripolyphosphate.

10. A liquid composition according to Claim 7 characterised in that said solid particles comprise an inert abrasive, whereby said composition is a scouring cream.

11. A liquid composition according to Claim 7 characterised in that said solid particles comprise a water soluble or sparingly soluble pesticide whereby said composition is a pesticidal composition.

12. A liquid composition according to Claim 7 characterised in that said solid particles comprise shale and/or weighting agent, whereby said composition is a drilling mud.

13. A drilling mud composition according to Claim 12 characterised in that said shale and/or weighting agent comprises barite and/or haematite.

14. A liquid composition according to any one of Claims 1 to 13 characterised in that, said surfactant (2) is a mixture of:
(i) at least one relatively soluble surfactant, which in a binary mixture with water:
(a) forms an L₁ micellar solution at a concentration of 20% by weight, having a cloudpoint below 0°C, preferably below -2°C, most preferably below -5°C, and/or
(b) forms a G-phase at an appropriate concentration, wherein the upper concentration at which said G-phase is formed has a value of at least 10 percentage points higher that the minimum concentration at which said G-phase is formed, expressed as a weight percentage of said surfactant, and/or
(c) forms a 15% micellar solution which does not become turbid or undergo phase separation on addition of 5% dissolved sodium chloride at 20°C, and/or
(d) is capable of forming an M-phase at some appropriate concentration, and
(ii) at least one relatively insoluble surfactant, which in a binary mixture with water;
(a) forms an L₂ phase at an appropriate concentration, and/or
(b) does not dissolve to form a clear micellar solution containing 20% by weight of surfactant at 20°C, and/or
(c) forms an L₁ micellar solution at a concentration of 20% by weight having a cloudpoint above -2°C, preferably above 0°C, most preferably above 5°C.
(d) forms an L₁ micellar solution at a concentration of 20% by weight having an inverse cloudpoint below 30°C, preferably below 20°C.

15. A liquid composition according to Claim 14 characterised in that said composition comprises at least one anionic surfactant, preferably an alkyl polyalkyleneoxy sulphate, a olefin sulphonate and/or a paraffin sulphonate, most preferably a C₁₀-C₂₀ alkyl (2 to 20 mole polyethyleneoxy) sulphate.

16. A liquid composition according to Claim 14 characterised in that said at least one anionic surfactant constitutes at least 20% by weight of the total weight of said surfactant, preferably from 25 to 50% by weight.

17. A liquid composition according to Claim 15 characterised in that said at least one anionic surfactant constitutes at least 10% by weight, based on the total weight of the composition.

18. A liquid composition according to any one of claims 14 to 17 characterised in that said relatively insoluble surfactant comprises a sodium soap of a C₁₀-C₂₀ carboxylic acid.

19. A liquid composition according to any one of Claims 14 to 17 characterised in that said relatively insoluble surfactant comprises at least one nonionic surfactant.

20. A liquid composition according to Claim 19 characterised in that said at least one nonionic surfactant is a nonionic surfactant having an average HLB of from 6 to 16.5, preferably at least one C₉-C₂₀ alkyl 2 to 20 mole ethoxylate.

21. A liquid composition according to any one of Claims 14 to 20 characterised in that said relatively insoluble surfactant constitutes from 25 to 80% by weight of the total surfactant.

22. A liquid composition according to Claim 1 characterised in that said composition is a liquid detergent composition comprising:-
(1) Water
(2) from 30 to 55% of surfactant, based on the total weight of surfactant and water, said surfactant comprising:-
(i) at least 10%, based on the total weight of the composition, of at least one anionic surfactant which is capable of forming a first 20% by weight L₁ micellar solution with water which first micellar solution has a cloud point below 0° C, and
(ii) at least 25%, based on the total weight of surfactant, of surfactants selected from anionic surfactant which are capable of forming a second 20% by weight micellar solution with water which second micellar solution has a cloud point greater than 0°C, and
(iii) non-ionic surfactants having an HLB between 6 and 16; and
(3) sufficient surfactant-desolubilising electrolyte to form an optically isotropic Newtonian liquid, having an X-ray diffraction peak between 4 and 10 nm and a viscosity less than 1.5 Pa.s.

23. A liquid composition according to Claim 1 characterised in that said composition is a built spherulitic liquid detergent composition comprising:-
(1) Water
(2) from 30 to 55% of surfactants based on the total weight of water and surfactant, said surfactant comprising
(i) at least 10%, based on the total weight of the composition of anionic surfactant capable of forming a first 20% micellar solution in water which first solution has a cloud point below 0°C, and
(ii) at least 25% based on the total weight of surfactant, or surfactants selected from anionic surfactants which are capable of forming a second 20% L₁ micellar solution in water which second solution has a cloud point greater than 0°C, and
(iii) non-ionic surfactants having an HLB between 6 and 16;
(3) sufficient surfactant desolubilising electrolyte to form a stable, solid-suspending, spherulitic surfactant system; and
(4) from 10 to 30% of zeolite, based on the total weight of the composition.

## Patentansprüche

1. Flüssige Zusammensetzung,
mit einem Gehalt an
(1) Wasser,
(2) Tensid, und
(3) Elektrolyt, der gelöstes Tensid weniger löslich macht,
dadurch gekennzeichnet, daß
(A) dieses Tensid (2)
(I) in Abwesenheit von Elektrolvt(en) eine gießfähige Phase zu bilden vermag, die bei einer Tensid-Konzentration von "c" in Wasser hexagonale Symmetrie aufweist; und
(II) in dem Anteil "c" vorhanden ist, bezogen auf das Gesamtgewicht von Tensid und Wasser; und
(B) der dieses gelöste Tensid weniger löslich machende Elektrolyt (3) innerhalb der Zusammensetzung in einer ausreichenden Menge vorhanden ist, um zu erzeugen:
(I) eine Newtonsche Flüssigkeit, und/oder
(II) eine im wesentlichen optisch isotrope Zusammensetzung, oder
(III) eine beständige sphärolithische Zusammensetzung, die Feststoffe zu suspendieren vermag.

2. Flüssige Zusammensetzung nach Anspruch 1,
dadurch gekennzeichnet, daß
diese Zusammensetzung eine Viskosität kleiner als 1,5 Pa·S aufweist, vorzugsweise eine Viskosität kleiner 1 Pa·S aufweist.

3. Flüssige Zusammensetzung nach Anspruch 1 oder 2,
dadurch gekennzeichnet, daß
diese Zusammensetzung, bezogen auf das Gesamtgewicht von Tensid und Wasser, einen Gesamtgehalt an Tensid von wenigstens 30 Gew.-%, vorzugsweise einen Gesamtgehalt an Tensid von 35 Gew.-% aufweist.

4. Flüssige Zusammensetzung nach einem der Ansprüche 1 bis 3,
dadurch gekennzeichnet, daß
diese Zusammensetzung in Abwesenheit eines nicht-tensidischen Trübungsmittels eine im wesentlichen transparente Flüssigkeit bildet.

5. Flüssige Zusammensetzung nach einem der Ansprüche 1 bis 4,
dadurch gekennzeichnet, daß
diese Zusammensetzung aufweist einen Gehalt an diesem, das gelöste Tensid weniger löslich machenden Elektrolyt von
- wenigstens 2 Gew.-%;
- weniger als die Sättigungskonzentration des Elektrolyten bei 0°C und weniger als diejenige Elektrolytkonzentration, bei welcher eine Aussalzung von Tensid auftritt, die erzeugt eine Trübung und/oder eine Phasentrennung;
- vorzugsweise weniger als 15 Gew.-%;
- besonders bevorzugt weniger als 10 Gew.-%.

6. Flüssige Zusammensetzung nach einem der Ansprüche 1 bis 5,
dadurch gekennzeichnet, daß
dieser das gelöste Tensid weniger löslich machende Elektrolyt ein Gerüststoff (builder) ist, vorzugsweise Natrium- oder Kalium-Citrat, Carbonat, Silikat, Nitrilotriacetat und/oder Pyrophosphat.

7. Flüssige Zusammensetzung nach einem der Ansprüche 1, 2, 3, 5,
dadurch gekennzeichnet, daß
diese Zusammensetzung suspendierte Feststoffpartikel enthält.

8. Flüssige Zusammensetzung nach Anspruch 7,
dadurch gekennzeichnet, daß
diese suspendierten Feststoffpartikel solche Partikel sind, die aus einem Gerüststoff (builder) bestehen, so daß die Zusammensetzung eine mit Gerüststoff versehene flüssige Waschmittelzusammensetzung ist.

9. Mit Gerüststoff versehene flüssige Waschmittelzusammensetzung nach Anspruch 8,
dadurch gekennzeichnet, daß
der Gerüststoff (builder) ein Zeolith und/oder Natriumtripolyphosphat ist.

10. Flüssige Zusammensetzung nach Anspruch 7,
dadurch gekennzeichnet, daß
diese Feststoffpartikel aus einem inerten Schleifmittel oder Schmirgelmaterial bestehen, so daß die Zusammensetzung eine Putzmittelpaste bildet.

11. Flüssige Zusammensetzung nach Anspruch 7,
dadurch gekennzeichnet, daß
diese Feststoffpartikel aus einem in Wasser löslichen oder mäßig löslichen Pestizid bestehen, so daß die Zusammensetzung ein Schädlings-Vertilgungsmittel bildet.

12. Flüssige Zusammensetzung nach Anspruch 7,
dadurch gekennzeichnet, daß
diese Feststoffpartikel aus Schiefer und/oder aus Beschwerungsmittel bestehen, so daß die Zusammensetzung einen Spülschlamm oder eine Spülungsflüssigkeit für Bohrungen bildet.

13. Spülschlamm oder Spülungsflüssigkeit für Bohrungen, nach Anspruch 12,
dadurch gekennzeichnet, daß
der Schiefer und/oder das Beschwerungsmittel aus Baryt (Schwerspat, BaSO₄) und/oder aus Haematit (Fe₂O₃)besteht.

14. Flüssige Zusammensetzung nach einem der Ansprüche 1 bis 13,
dadurch gekennzeichnet, daß
dieses Tensid (2) ist ein Gemisch aus
(I) wenigstens einem relativ leicht löslichen Tensid,
das in einer binären Mischung mit Wasser
(a) bei einer Konzentration von 20 Gew.-% eine micellare L₁-Lösung bildet, die einen Trübungspunkt unterhalb 0°C aufweist, vorzugsweise einen Trübungspunkt unterhalb -2°C aufweist, besonders bevorzugt einen Trübungspunkt unterhalb -5°C aufweist; und/oder
(b) bei einer passenden Konzentration eine G-Phase bildet, wobei die obere Konzentration, bei welcher diese G-Phase gebildet wird, um wenigstens 10 Prozentpunkte höher liegt, als die minimale Konzentration, bei welcher diese G-Phase gebildet wird, ausgedrückt in Gew.-% des Tensids; und/oder
(c) bei Zugabe von 5 % gelöstem Natriumchlorid bei 20°C eine 15 %-ige micellare Lösung bildet, die nicht trübe wird, und die nicht einer Phasentrennung unterliegt; und/oder
(d) bei einer passenden Konzentration eine M-Phase zu bilden vermag; und
(II) wenigstens einem relativ unlöslichen Tensid, das in einer binären Mischung mit Wasser
(a) bei einer passenden Konzentration eine L₂-Phase bildet; und/oder
(b) sich nicht auflöst, um eine klare micellare Lösung zu bilden, die bei 20°C 20 Gew.-% Tensid enthält; und/oder
(c) bei einer Konzentration von 20 Gew.-% eine micellare L₁-Lösung bildet, die einen Trübungspunkt oberhalb -2°C, vorzugsweise einen Trübungspunkt oberhalb 0°C und besonders bevorzugt einen Trübungspunkt oberhalb 5°C aufweist; und/oder
(d) bei einer Konzentration von 20 Gew.-% eine micellare L₁-Lösung bildet, die einen inversen Trübungspunkt unterhalb 30°C, vorzugsweise einen inversen Trübungspunkt unterhalb 20°C aufweist.

15. Flüssige Zusammensetzung nach Anspruch 14,
dadurch gekennzeichnet, daß
diese Zusammensetzung wenigstens ein anionisches Tensid enthält, vorzugsweise ein Alkyl-polyalkylen-oxy-sulfat, ein Olefin-sulfonat und/oder ein Paraffin-Sulfonat, besonders bevorzugt ein C₁₀-C₂₀-Alkyl (2 bis 20 Mol Polyethylen-oxy)sulfat.

16. Flüssige Zusammensetzung nach Anspruch 14,
dadurch gekennzeichnet, daß
wenigstens ein anionisches Tensid mindestens 20 Gew.-% des Gesamtgewichtes an diesem Tensid ausmacht, vorzugsweise 25 bis 50 Gew.-% des Gesamtgewichtes an diesem Tensid ausmacht.

17. Flüssige Zusammensetzung nach Anspruch 15,
dadurch gekennzeichnet, daß
wenigstens ein anionisches Tensid mindestens 10 Gew.-% des Gesamtgewichtes der Zusammensetzung ausmacht.

18. Flüssige Zusammensetzung nach einem der Ansprüche 14 bis 17,
dadurch gekennzeichnet, daß
dieses relativ unlösliche Tensid eine Natriumseife einer C₁₀-C₂₀-Carbonsäure ist.

19. Flüssige Zusammensetzung nach einem der Ansprüche 14 bis 17,
dadurch gekennzeichnet, daß
dieses relativ unlösliche Tensid wenigstens ein nicht-ionisches Tensid enthält.

20. Flüssige Zusammensetzung nach Anspruch 19,
dadurch gekennzeichnet, daß
wenigstens ein nicht-ionisches Tensid ein solches nicht-ionisches Tensid ist, das einen mittleren HLB-Wert von 6 bis 16,5 aufweist, vorzugsweise wenigstens eine C₉-C₂₀-Alkyl-Verbindung mit 2 bis 20 Mol Ethoxylat ist.

21. Flüssige Zusammensetzung nach einem der Ansprüche 14 bis 20,
dadurch gekennzeichnet, daß
dieses relativ unlösliche Tensid 25 bis 80 Gew.-% des Gesamtgehaltes an Tensid ausmacht.

22. Flüssige Zusammensetzung nach Anspruch 1,
dadurch gekennzeichnet, daß
diese Zusammensetzung eine flüssige Waschmittelzusammensetzung ist, die aufweist:
(1) Wasser,
(2) 30 bis 55 Gew.-% Tensid, bezogen auf das Gesamtgewicht von Tensid und Wasser, wobei dieses Tensid
(I) zu mindestens 10 Gew.-%, bezogen auf das Gesamtgewicht der Zusammensetzung aus wenigstens einem anionischen Tensid besteht, das mit Wasser zu bilden vermag eine erste, 20 Gew.-%-ige micellare L₁-Lösung, wobei diese erste micellare Lösung einen Trübungspunkt unterhalb 0°C aufweist; und
(II) zu mindestens 25 Gew.-%, bezogen auf das Gesamtgewicht an Tensid, aus Tensiden besteht, die aus anionischen Tensiden ausgewählt sind, die mit Wasser eine zweite 20 Gew.-%-ige micellare Lösung zu bilden vermögen, wobei diese zweite micellare Lösung einen Trübungspunkt oberhalb 0°C aufweist; und
(III) nichtionische Tenside enthält, die einen HLB-Wert zwischen 6 und 16 aufweisen; und
(3) eine ausreichende Menge Tensid weniger löslich machenden Elektrolyten, um eine optisch isotrope Newtonsche Flüssigkeit zu bilden, die einen Röntgenstrahlungs-Beugungspeak zwischen 4 und 10 nm aufweist, und die eine Viskosität kleiner als 1,5 Pa S aufweist.

23. Flüssige Zusammensetzung nach Anspruch 1,
dadurch gekennzeichnet, daß
diese Zusammensetzung eine mit Gerüststoff versehene sphärolithische flüssige Waschmittelzusammensetzung ist, die aufweist:
(1) Wasser,
(2) 30 bis 55 Gew.-% Tenside, bezogen auf das Gesamtgewicht von Wasser und Tensid,
wobei dieses Tensid
(I) zu mindestens 10 Gew.-%, bezogen auf das Gesamtgewicht der Zusammensetzung, aus einem anionischen Tensid besteht, das in Wasser eine erste, 20 Gew.-%-ige micellare Lösung zu bilden vermag, wobei diese erste Lösung einen Trübungspunkt unterhalb 0°C aufweist;
(II) zu mindestens 25 Gew.-%, bezogen auf das Gesamtgewicht an Tensid, aus Tensiden besteht, die aus anionischen Tensiden ausgewählt sind, welche in Wasser eine zweite, micellare 20 Gew.-%-ige L₁-Lösung zu bilden vermögen, wobei diese zweite Lösung einen Trübungspunkt oberhalb 0°C aufweist; und
(III) nichtionische Tenside mit einem HLB-Wert von 6 bis 16 enthält;
(3) eine ausreichende Menge an Tensid weniger löslich machendem Elektrolyten, um ein beständiges, Feststoff-suspendierendes, sphärolithisches Tensidsystem zu bilden; und
(4) 10 bis 30 Gew.-% Zeolith, bezogen auf das Gesamtgewicht der Zusammensetzung.

## Revendications

1. Composition liquide comprenant:
(1) de l'eau
(2) un tensioactif, et
(3) un électrolyte de désolubilisation du tensioactif dissous,
caractérisée en ce que
(A) ledit tensioactif (2)
(i) est capable en l'absence d'électrolytes de former une phase pouvant s'écouler qui présente une symétrie hexagonale à une concentration dans l'eau de c ;
et
(ii) est présent dans la proportion de c, sur la base du poids total de tensioactif et d'eau,
(B) ledit électrolyte de désolubilisation du tensioactif dissous (3) est présent dans ladite composition en une quantité suffisante pour donner :
(i) un liquide Newtonien, et/ou
(ii) une composition sensiblement optiquement isotrope, ou
(iii) une composition sphérolithique stable capable de mettre des matières solides en suspension.

2. Composition liquide selon la revendication 1, caractérisée en ce que ladite composition a une viscosité inférieure à 1,5 Pa.S., de préférence inférieure à 1,0 Pa.S.

3. Composition liquide selon l'une quelconque des revendications 1 ou 2, caractérisée en se que ladite composition comprend, sur la base du poids total de tensioactif et d'eau, au moins 30% en poids de tensioactif total, de préférence 35% en poids de tensioactif total.

4. Composition liquide selon l'une quelconque des revendications 1 à 3, caractérisée en ce que ladite composition en l'absence de tout opacifiant non-tensioactif serait un fluide sensiblement transparent.

5. Composition liquide selon l'une quelconque des revendications 1 à 4, caractérisée en ce que ladite composition comprend au moins 2% en poids dudit électrolyte de désolubilisation du tensioactif dissous, mais au-dessous de la concentration de saturation dudit électrolyte à 0° et au-dessous de la concentration à laquelle le tensioactif relargue pour créer une turbidité et/ou une séparation de phase, de préférence inférieure à 15% en poids, mieux encore inférieure à 10% en poids.

6. Composition liquide selon l'une quelconque des revendications 1 à 5, caractérisée en ce que ledit électrolyte de désolubilisation du tensioactif comprend un activateur de détergence, de préférence un citrate, un carbonate, un silicate, un nitriloacétate et/ou un pyrophosphate de sodium ou de potassium.

7. Composition liquide selon l'une quelconque des revendications 1, 2, 3, 5, caractérisée en ce que ladite composition contient des particules solides en suspension.

8. Composition liquide selon la revendication 7, caractérisée en ce que lesdites particules solides en suspension sont des particules d'un activateur de détergence, grâce auxquelles ladite composition est une composition détergente liquide activée.

9. Composition détergente liquide activée selon la revendication 8, caractérisée en ce que ledit activateur de détergence comprend de la zéolite et/ou du tripolyphosphate de sodium.

10. Composition liquide selon la revendication 7, caractérisée en ce que lesdites particules solides comprennent un abrasif inerte, grâce auquel ladite composition est une crème de lavage.

11. Composition liquide selon la revendication 7, caractérisée en ce que lesdites particules solides comprennent un pesticide soluble ou difficilement soluble dans l'eau, grâce auquel ladite composition est une composition pesticide.

12. Composition liquide selon la revendication 7, caractérisée en ce que lesdites particules solides comprennent un schiste argileux et/ou un agent alourdissant, grâce auquel ladite composition est une boue de forage.

13. Composition de boue de forage selon la revendication 12, caractérisée en ce que ledit schiste argileux et/ou agent alourdissant comprend de la baryte et/ou de l'hématite.

14. Composition liquide selon l'une quelconque des revendications 1 à 13, caractérisée en ce que ledit tensioactif (2) est un mélange de :
(i) au moins un tensioactif relativement soluble, qui en mélange binaire avec l'eau,
(a) forme une solution micellaire L₁ à une concentration de 20% en poids, ayant un point de trouble au-dessous de 0°C, de préférence au-dessous de -2°C, et de manière préférée entre toutes au-dessous de -5°C, et/ou
(b) forme une phase G à une concentration appropriée, dans laquelle la concentration supérieure à laquelle ladite phase G est formée a une valeur d'au moins 10 points en pourcentage au-dessus de la concentration minimale à laquelle ladite phase G est formée, exprimée en pourcentage en poids dudit tensioactif, et/ou
(c) forme une solution micellaire à 15% qui ne se trouble pas ou ne subit pas de séparation de phase quand on ajoute du chlorure de sodium dissous à 5% à 20°C, et/ou
(d) est capable de former une phase M à une concentration appropriée et
(ii) au moins un tensioactif relativement insoluble, qui en mélange binaire avec l'eau,
(a) forme une phase L₂ à une concentration appropriée, et/ou
(b) ne se dissout pas pour former une solution micellaire claire contenant 20% en poids de tensioactif à 20°C, et/ou
(c) forme une solution micellaire L₁ à une concentration de 20% en poids ayant un point de trouble au-dessus de -2°C, de préférence au-dessus de 0°C, et de manière préférée entre toutes au-dessus de 5°C,
(d) forme une solution micellaire L₁ à une concentration de 20% en poids ayant un point de trouble inverse au-dessous de 30°C, de préférence au-dessous de 20°C.

15. Composition liquide selon la revendication 14, caractérisée en ce que ladite composition comprend au moins un tensioactif anionique, de préférence un polyalcylèneoxy-sulfate d'alkyle, un sulfonate d'oléfine et/ou un sulfonate de paraffine, de manière préférée entre toutes un sulfate (de 2 à 20 moles de polyéthylèneoxy) d'alkyle en C₁₀-C₂₀.

16. Composition liquide selon la revendication 14, caractérisée en ce que ledit au moins un tensioactif anionique, représente au moins 20% en poids du poids total dudit tensioactif, de préférence de 25 à 50% en poids.

17. Composition liquide selon la revendication 15, caractérisée en ce que ledit au moins un tensioactif anionique, représente au moins 10% en poids, sur la base du poids total de la composition.

18. Composition liquide selon l'une quelconque des revendications 14 à 17, caractérisée en ce que ledit tensioactif relativement insoluble comprend un savon sodique d'un acide carboxylique en C₁₀-C₂₀.

19. Composition liquide selon l'une quelconque des revendications 14 à 17, caractérisée en ce que ledit tensioactif relativement insoluble comprend au moins un tensioactif non-ionique.

20. Composition liquide selon la revendication 19, caractérisée en ce que ledit au moins un tensioactif non-ionique, est un tensioactif non-ionique ayant un HLB moyen de 6 à 16,5, de préférence au moins un éthoxylate de 2 à 20 moles d'alkyle en C₉-C₂₀.

21. Composition liquide selon l'une quelconque des revendications 14 à 20, caractérisée en ce que ledit tensioactif relativement insoluble représente de 25 à 80% en poids du tensioactif total.

22. Composition liquide selon la revendication 1, caractérisée en ce que ladite composition est une composition détergente liquide comprenant :
(1) de l'eau
(2) de 30 à 55% de tensioactif sur la base du poids total de tensioactif et d'eau, ledit tensioactif comprenant :
(i) au moins 10%, sur la base du poids total de la composition, d'au moins un tensioactif anionique qui est capable de former une première solution micellaire L₁ de 20% en poids avec l'eau, cette première solution micellaire ayant un point de trouble au-dessous de 0°C, et
(ii) au moins 25%, sur la base du poids total de tensioactif, de tensioactifs choisis parmi les tensioactifs anioniques qui sont capables de former une deuxième solution micellaire de 20% en poids avec l'eau, cette deuxième solution micellaire ayant un point de trouble supérieur à 0°C, et
(iii) des tensioactifs non-ioniques ayant un HLB entre 6 et 16 ; et
(3) un électrolyte de désolubilisation de tensioactif suffisant pour former un liquide Newtonien optiquement isotrope, ayant un pic de diffraction des rayons X entre 4 et 10 nm et une viscosité inférieure a 1,5 Pa.s.

23. Composition liquide selon la revendication 1, caractérisée en ce que ladite composition est une composition détergente sphérolithique liquide activée comprenant :
(1) de l'eau
(2) de 30 à 55% de tensioactifs, sur la base du poids total d'eau et de tensioactif, ledit tensioactif comprenant :
(i) au moins 10%, sur la base du poids total de la composition, d'un tensioactif anionique capable de former une première solution micellaire à 20% dans l'eau, cette première solution ayant un point de trouble au-dessous de 0°C, et
(ii) au moins 25%, sur la base du poids total de tensioactif, de tensioactifs choisis parmi les tensioactifs anioniques qui sont capables de former une deuxième solution micellaire L₁ à 20% dans l'eau, cette deuxième solution ayant un point de trouble supérieur à 0°C, et
(iii) des tensioactifs non-ioniques ayant un HLB entre 6 et 16 ;
(3) un électrolyte de désolubilisation de tensioactif suffisant pour former un système de tensioactif sphérolithique stable, de mise en suspension des matières solides, et
(4) de 10 à 30% de zéolithe, sur la base du poids total de la composition.
